(19) Europäisches Patentamt
European Patent Office
Office européen des brevets

(11) EP 4 442 764 B1

(12) **EUROPEAN PATENT SPECIFICATION**

(45) Date of publication and mention of the grant of the patent:
**24.06.2026 Bulletin 2026/26**

(21) Application number: **22901329.7**

(22) Date of filing: **29.11.2022**

(51) International Patent Classification (IPC):
***C08L 67/02*** *(2006.01)* ***C08K 3/013*** *(2018.01)*
***C08K 3/04*** *(2006.01)* ***C08K 3/08*** *(2006.01)*
***C08K 7/04*** *(2006.01)* ***C08K 7/18*** *(2006.01)*

(52) Cooperative Patent Classification (CPC):
(C-Sets available)
**C08L 67/02;** C08L 2205/025; C08L 2205/035;
Y02W 30/62 (Cont.)

(86) International application number:
**PCT/JP2022/044038**

(87) International publication number:
**WO 2023/100897 (08.06.2023 Gazette 2023/23)**

(54) **RESIN COMPOSITION, MOLDED ARTICLE, COMPOSITE, AND METAL/RESIN COMPOSITE**

HARZZUSAMMENSETZUNG, FORMKÖRPER, VERBUNDSTOFF UND METALL-/HARZVERBUNDSTOFF

COMPOSITION DE RÉSINE, ARTICLE MOULÉ, COMPOSITE ET COMPOSITE MÉTAL/RÉSINE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.11.2021 JP 2021195022**
**30.11.2021 JP 2021195024**
**30.11.2021 JP 2021195025**
**24.03.2022 JP 2022049153**

(43) Date of publication of application:
**09.10.2024 Bulletin 2024/41**

(73) Proprietor: **Mitsubishi Chemical Corporation**
**Tokyo 100-8251 (JP)**

(72) Inventors:
- **SUZUKI, Takayuki**
**Hiratsuka-shi, Kanagawa 254-0016 (JP)**
- **KOBAYASHI, Rina**
**Hiratsuka-shi, Kanagawa 254-0016 (JP)**
- **KURODA, Tatsuya**
**Hiratsuka-shi, Kanagawa 254-0016 (JP)**
- **HIWATASHI,Yuki**
**Hiratsuka-shi, Kanagawa 254-0016 (JP)**
- **SHOJI, Hidekazu**
**Hiratsuka-shi, Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
**WO-A1-2020/246335** **WO-A1-2021/251433**
**JP-A- 2002 516 204** **JP-A- 2004 244 459**
**JP-A- 2006 152 066** **JP-A- 2011 127 100**
**JP-A- 2018 203 932** **JP-A- H04 239 550**
**JP-A- H04 239 550** **JP-A- S5 550 055**
**US-A1- 2007 066 714** **US-A1- 2021 061 990**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 442 764 B1

(52) Cooperative Patent Classification (CPC): (Cont.)

C-Sets
**C08L 67/02, C08L 67/02, C08L 63/00, C08K 7/14, C08K 3/04;**
**C08L 67/02, C08L 67/02, C08L 63/00, C08L 27/18, C08K 3/2279, C08K 3/36, C08K 7/14, C08K 3/04;**
**C08L 67/02, C08L 67/02, C08L 67/02, C08L 67/02, C08L 25/12, C08L 25/14, C08K 3/26, C08K 3/04**

## Description

[Technical Field]

The present invention relates to a resin composition, a molded article, a composite, and a metal-resin composite. In particular, the present invention relates to a resin composition that includes a polyester resin.

[Background Art]

Polyester resins have excellent mechanical performance, electrical properties, processing properties, and the like, and are widely used for various purposes.
Examples of known polyester resins include polyethylene terephthalate resins and polybutylene terephthalate resins. In particular, resin compositions that contain a polyethylene terephthalate resin and a polybutylene terephthalate resin have been studied (Patent Literature 1 to Patent Literature 4).

[Citation List]

[Patent Literature]

[Patent Literature 1]
International Publication No. WO 2019/217680
[Patent Literature 2]
Japanese Patent Laid-Open No. 2018-203932A A
[Patent Literature 3]
International Publication No. WO 2020/246335 [Patent Literature 4] JPH04239550A

[Summary of the Invention]

[Object of the Invention]

Resin compositions containing a polyethylene terephthalate resin and a polybutylene terephthalate resin are being used for a wide variety of purposes due to increasing demand. Therefore, new materials are required for resin compositions containing a polyethylene terephthalate resin and a polybutylene terephthalate resin.
It is an object of the present invention to solve this problem, and the present invention provides a novel resin composition that contains a polyethylene terephthalate resin and a polybutylene terephthalate resin, as well as a resin composition, a molded article, a composite, and a metal-resin composite formed from such resin composition.

[Solution to Problem]

The present inventors conducted research to address the above-mentioned problems, and as a result, discovered that the above problems could be solved by using a resin comprising a very small amount of elemental iron as a polyethylene terephthalate resin.

[Advantageous Effects of Invention]

According to the present invention, it is possible to provide a novel resin composition that includes a polyethylene terephthalate resin and a polybutylene terephthalate resin, as well as provide a resin composition, a molded article, a composite, and a metal-resin composite formed from such a resin composition.

[Brief Description of Drawings]

[Figure 1] Figure 1 is a diagram showing a method for measuring bonding strength in Examples 3-1 to 3-3 and Comparative Examples 3-1 to 3-3.

[Description of Embodiments]

A mode for carrying out the present invention (hereinafter, simply referred to as "this embodiment") will now be described in detail. It is noted that this embodiment is an illustrative example for describing the present invention, and the present invention is not limited to only this embodiment.
In addition, in this specification, the meaning of "from ... to" includes the numerical values described before and after "..." as a lower limit value and an upper limit value.
In this specification, various physical property values and characteristic values are assumed to be values as of 23°C, unless otherwise stated.
If the measurement methods and the like described in the standards shown in this specification differ from year to year, unless otherwise stated, those measurement standards shall be based on the standards as of January 1, 2022.
Figure 1 is a schematic diagram, and the scale etc. may not match reality.
The resin composition of this embodiment is characterized by including a polybutylene terephthalate resin, a polyethylene terephthalate resin, and an inorganic filler (preferably a non-fibrous inorganic filler and/or a fibrous filler), wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and the polyethylene terephthalate resin contains from 1.0 to 100 μg/g of elemental iron. With such a configuration, the elemental iron exhibits a good action, and a resin composition whose various properties are excellent can be obtained.

1. First embodiment

The resin composition of the first embodiment is characterized by including from 1.0 to 100 parts by mass of a non-fibrous inorganic filler with respect to a total of 100 parts by mass of a polybutylene terephthalate resin and a polyethylene terephthalate resin, wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and an amount of elemental iron contained in the polyethylene terephthalate resin is from 1.0 to 100 μg/g.
With such a configuration, a resin composition having excellent mold release properties and hydrolysis resistance can be obtained. In particular, by using a polyethylene terephthalate resin containing a trace amount of elemental iron, it is inferred that the elemental iron acts as a nucleating agent, increasing the crystallization rate in differential scanning calorimetry (DSC measurement) of the resin composition, and improving the mold release properties. Further, it is inferred that hydrolysis resistance is improved due to an improvement in crystallinity as a result of the improvement in the crystallization rate.

<Polybutylene terephthalate resin>

The resin composition of the first embodiment includes a polybutylene terephthalate resin.
The polybutylene terephthalate resin used in the resin composition of the first embodiment is a polyester resin having a structure in which a terephthalic acid unit and a 1,4-butanediol unit are joined by an ester bond. Examples of the resin composition include, in addition to a polybutylene terephthalate resin (homopolymer), polybutylene terephthalate copolymers containing a copolymer component other than the terephthalic acid unit and the 1,4-butanediol unit, and mixtures of homopolymers and polybutylene terephthalate copolymers.
The polybutylene terephthalate resin may contain one or more dicarboxylic acid units other than terephthalic acid.
Specific examples of other dicarboxylic acids include aromatic dicarboxylic acids such as isophthalic acid, orthophthalic acid, 1,5-naphthalene dicarboxylic acid, 2,5-naphthalene dicarboxylic acid, 2,6-naphthalene dicarboxylic acid, biphenyl-2,2'-dicarboxylic acid, biphenyl-3,3'-dicarboxylic acid, biphenyl-4,4'-dicarboxylic acid, bis(4,4'-carboxyphenyl)methane, anthracene dicarboxylic acid, and 4,4'-diphenyl ether dicarboxylic acid, alicyclic dicarboxylic acids such as 1,4-cyclohexanedicarboxylic acid and 4,4'-dicyclohexyldicarboxylic acid, aliphatic dicarboxylic acids such as adipic acid, sebacic acid, azelaic acid, and dimer acid, and the like.
In the polybutylene terephthalate resin used in the first embodiment, the terephthalic acid unit preferably accounts for, of all the dicarboxylic acid units, 80 mol% or more, more preferably 90 mol% or more, and further preferably 95 mol% or more, and may be 99 mol% or more.
The diol unit may contain one or more other diol units in addition to 1,4-butanediol.
Specific examples of other diol units include aliphatic or alicyclic diols having from 2 to 20 carbon atoms, bisphenol derivatives, and the like. Specific examples include ethylene glycol, propylene glycol, 1,5-pentanediol, 1,6-hexanediol, neopentyl glycol, decamethylene glycol, cyclohexanedimethanol, 4,4'-dicyclohexylhydroxymethane, 4,4'-dicyclohexylhydroxypropane, ethylene oxide-added diol of bisphenol A, and the like. Further, in addition to the above-described bifunctional monomers, a small amount of a trifunctional monomer such as trimellitic acid, trimesic acid, pyromellitic acid, pentaerythritol, and trimethylolpropane can be used in combination to introduce a branched structure, and a small amount of a monofunctional compound such as a fatty acid can be used in combination to adjust the molecular weight.

In the polybutylene terephthalate resin used in the first embodiment, the 1,4-butanediol unit preferably accounts for, of all the diol units, 80 mol% or more, more preferably 90 mol% or more, and further preferably 95 mol% or more, and may be 99 mol% or more.

As described above, the polybutylene terephthalate resin is preferably a polybutylene terephthalate homopolymer obtained by polycondensing a terephthalic acid and 1,4-butanediol. Further, the polybutylene terephthalate resin may be a polybutylene terephthalate copolymer containing one or more dicarboxylic acids other than the terephthalic acid as a carboxylic acid unit and/or one or more diols other than the 1,4-butanediol as a diol unit. When the polybutylene terephthalate resin is a polybutylene terephthalate resin modified by copolymerization, specific examples of preferred copolymers include a polyester ether resin copolymerized with a polyalkylene glycol, in particular polytetramethylene glycol, a dimer acid copolymerized polybutylene terephthalate resin, and an isophthalic acid copolymerized polybutylene terephthalate resin. Among these, it is preferred to use a polyester ether resin copolymerized with polytetramethylene glycol.

In addition, when the polybutylene terephthalate resin is a copolymer, this refers to an amount of copolymerization that is 1 mol% or more and less than 50 mol% of the total units of the polybutylene terephthalate resin. Within that, the amount of copolymerization is preferably 2 mol% or more and less than 50 mol%, more preferably from 3 to 40 mol%, and further preferably from 5 to 20 mol%. Such a copolymerization proportion is preferred because a molded article having low molding shrinkage and high impact resistance can be obtained.

The terminal carboxyl group content of the polybutylene terephthalate resin may be appropriately selected and determined, but the terminal carboxyl group content is usually 60 eq/ton or less, preferably 50 eq/ton or less, and more preferably 30 eq/ton or less. By setting the terminal carboxyl group content to be equal to or less than above upper limit, alkali resistance and hydrolysis resistance tend to improve. Although the lower limit of the terminal carboxyl group content is not particularly limited, the lower limit is preferably 5 eq/ton or more in consideration of the productivity of producing the polybutylene terephthalate resin.

The terminal carboxyl group content of the polybutylene terephthalate resin is a value measured by dissolving 0.5 g of the polybutylene terephthalate resin in 25 mL of benzyl alcohol, and titrating the resultant solution using a 0.01 mol/L solution of sodium hydroxide in benzyl alcohol. The terminal carboxyl group content can be adjusted by any conventionally known method, such as a method of adjusting polymerization conditions such as raw material charge ratio, and polymerization temperature, and pressure reduction method during polymerization, and a method of reacting with a terminal blocking agent.

The intrinsic viscosity of the polybutylene terephthalate resin is preferably 0.5 dL/g or more, more preferably 0.6 dL/g or more, further preferably 0.7 dL/g or more, particularly preferably 0.8 dL, and may even be 0.95 dL/g or more, 1.00 dL/g or more, or 1.05 dL/g or more. The intrinsic viscosity is preferably 2 dL/g or less, more preferably 1.5 dL/g or less, further preferably 1.4 dL/g or less, still further preferably 1.3 dL/g or less, still further preferably 1.26 dL/g or less, and may be 1.0 dL/g or less or 0.9 dL/g or less. By setting the intrinsic viscosity to be equal to or less than the above upper limit, moldability tends to be further improved.

When the resin composition of the first embodiment contains two or more types of polyester resins, the intrinsic viscosity is that of the mixture.

The intrinsic viscosity is measured according to the description in the working examples below.

The polybutylene terephthalate resin is produced by batchwise or continuous melt polymerization of a dicarboxylic acid component having a terephthalic acid as a main component or an ester derivative thereof and a diol component having 1,4-butanediol as a main component. Further, after producing a low molecular weight polybutylene terephthalate resin by melt polymerization, the degree of polymerization (or molecular weight) can be increased to a desired value by further performing solid phase polymerization under a nitrogen stream or under reduced pressure.

The polybutylene terephthalate resin is preferably obtained by a production method in which a dicarboxylic acid component having a terephthalic acid as a main component and a diol component having 1,4-butanediol as a main component are melt-polycondensed in a continuous or batch method.

The catalyst used in carrying out the esterification reaction may be a conventionally known catalyst, and examples thereof include titanium compounds, tin compounds, magnesium compounds, calcium compounds, and the like. Particularly preferred among these are titanium compounds. Specific examples of the titanium compound as the esterification catalyst include titanium alcoholates such as tetramethyl titanate, tetraisopropyl titanate, and tetrabutyl titanate, and titanium phenolates such as tetraphenyl titanate.

<Polyethylene terephthalate resin>

The resin composition of the first embodiment includes a polyethylene terephthalate resin (hereinafter, sometimes referred to as "PET"). The polyethylene terephthalate resin used in the first embodiment is a resin having a dicarboxylic acid and a diol as main constituent units.

In the first embodiment, the amount of the elemental iron contained in the polyethylene terephthalate resin is from 1.0 to 100 μg/g. By setting the amount to be equal to or more than the above lower limit, the crystallization rate tends to be improved and mold release properties tend to be excellent. By setting the amount to be equal to or less than the above upper limit, mold release properties and hydrolysis resistance tend to be further improved.

Polyethylene terephthalate resins, especially recycled PET such as recycled PET derived from PET bottles, may contain metal elements as impurities. Impurities may also come from the reaction vessel and, in the case of recycled PET, the cutter. It was thought that it is better to not include metal elements, especially elemental iron, since such substances are magnetic, but it has been discovered that by purposely including a small amount of elemental iron in the resin composition of the first embodiment, mold release properties and hydrolysis resistance can be improved.

It is inferred that, in the first embodiment, the elemental iron acts as a crystal nucleating agent in the resin composition of the first embodiment, and that the elemental iron in particular contributes to improving the mold release properties of a molded article obtained by molding the resin composition. It goes without saying that the first embodiment is not limited to using recycled PET, and virgin PET containing a predetermined amount of elemental iron may also be preferably used.

The amount of the elemental iron in the polyethylene terephthalate resin used in the first embodiment is 1.0 μg/g or more, preferably 1.2 μg/g or more, more preferably 1.4 μg/g or more, further preferably 1.5 μg/g or more, still further preferably 1.6 μg/g or more, still further preferably 1.8 μg/g or more, and still further preferably 2.4 μg/g or more. The amount of the elemental iron in the polyethylene terephthalate resin is 100 μg/g or less, preferably 90 μg/g or less, more preferably 80.0 μg/g or less, further preferably 50 μg/g or less, still further preferably 20 μg/g or less, still further preferably 10 μg/g or less, still further preferably 5.0 μg/g or less, and particularly further preferably 4.0 μg/g or less.

The polyethylene terephthalate resin used in the first embodiment preferably contains at least one of elemental calcium, elemental sodium, and elemental titanium in addition to the elemental iron. Moreover, in addition to the elemental iron, it is preferred to contain elemental sodium and elemental titanium, and more preferred to contain elemental calcium.

The amount of the elemental calcium in the polyethylene terephthalate resin used in the first embodiment is preferably 1.0 μg/g or more, more preferably 1.1 μg/g or more, further preferably 1.2 μg/g or more, still further preferably 1.3 μg/g or more, still further preferably 2.0 μg/g or more, and may be 3.0 μg/g or more. By setting the amount to be equal to or more than the lower limit, mold release properties tend to be further improved. The amount of the elemental calcium in the polyethylene terephthalate resin is preferably 30 μg/g or less, more preferably 25 μg/g or less, further preferably 20 μg/g or less, still further preferably 15 μg/g or less, still further preferably 10 μg/g or less, still further preferably 8.0 μg/g or less, and particularly further preferably 6.0 μg/g or less. By setting the amount to be equal to or less than the above upper limit, moldability, appearance, and the like tend to be further improved.

The amount of the elemental sodium in the polyethylene terephthalate resin (preferably recycled PET) used in the first embodiment may be 0.1 μg/g or more, 0.4 μg/g or more, 0.5 μg/g or more, 0.6 μg/g or more, 0.8 μg/g or more, 1.0 μg/g or more, 1.2 μg/g or more, 1.6 μg/g or more, or 2.0 μg/g or more. The upper limit may be, for example, 30 μg/g or less, 25 μg/g or less, 20 μg/g or less, 15 μg/g or less, 10 μg/g or less, 8 μg/g or less, or 5 μg/g or less.

The amount of the elemental titanium in the polyethylene terephthalate resin used in the first embodiment is preferably 0.4 μg/g or more, more preferably 0.6 μg/g or more, further preferably 1.0 μg/g or more, still further preferably 1.1 μg/g or more, still further preferably 1.2 μg/g or more, still further preferably 1.3 μg/g or more, particularly further preferably 1.4 μg/g or more, and may be 1.6 μg/g or more. By setting the amount to be equal to or more than the lower limit, mold release properties tend to be further improved. The amount of the elemental titanium in the polyethylene terephthalate resin is preferably 30 μg/g or less, more preferably 25 μg/g or less, further preferably 20 μg/g or less, still further preferably 15 μg/g or less, still further preferably 10 μg/g or less, still further preferably 8 μg/g, and particularly further preferably 6 μg/g. By setting the amount to be equal to or less than the above upper limit, moldability, appearance, and the like tend to be further improved.

The amount of the elemental magnesium in the polyethylene terephthalate resin (preferably recycled PET) used in the first embodiment is preferably 0.1 μg/g or more, and may further be 0.3 μg/g or more, 0.5 μg/g or more, 0.6 μg/g or more, or 0.7 μg/g or more. In addition, the upper limit is preferably 40 μg/g or less, and may further be 30 μg/g or less, 20 μg/g or less, 15 μg/g or less, 10 μg/g or less, 8 μg/g or less, 5 μg/g or less, 3 μg/g, or 2 μg/or less. By setting the amount in this range, the effects of the present invention tends to be exhibited more effectively.

The amount of the elemental phosphorous in the polyethylene terephthalate resin used in the first embodiment is preferably 0.1 μg/g or more, more preferably 0.5 μg/g or more, further preferably 1.0 μg/g or more, still further preferably 2.0 μg/g or more, still further preferably 3.0 μg/g or more, still further preferably 4.0 μg/g or more, particularly further preferably 5.0 μg/g or more, may be 6.0 μg/g or more, and may be 7.0 μg/g or more. By setting the amount to be equal to or

more than the lower limit, mold release properties tend to be further improved. The amount of the elemental phosphorous in the polyethylene terephthalate resin is preferably 15 μg/g or less, more preferably 14 μg/g or less, further preferably 13 μg/g or less, still further preferably 12 μg/g or less, and still further preferably 11 μg/g or less. By setting the amount to be equal to or less than the above upper limit, moldability, appearance, and the like tend to be further improved, and adhesion properties tend to be further improved.

In addition, the total amount of the elemental iron, elemental sodium, and elemental titanium in the polyethylene terephthalate resin used in the first embodiment is preferably 1.0 μg/g or more, more preferably 1.5 μg/g or more, further preferably 4.0 μg/g or more, still further preferably 5.0 μg/g or more, and still further preferably 6.0 μg/g or more. By setting the total amount to be equal to or more than the lower limit, mold release properties tend to be further improved. The total amount of the elemental iron, elemental sodium, and elemental titanium in the polyethylene terephthalate resin is preferably 30 μg/g or less, more preferably 25 μg/g or less, further preferably 20 μg/g or less, still further preferably 15.0 μg/g or less, still further preferably 10 μg/g or less, and still further preferably 8.0 μg/g or less. By setting the amount to be equal to or less than the above upper limit, moldability, appearance, and the like tend to be further improved.

The qualitative/semi-quantitative analysis (μg/g) of the metal elements in the PET is performed by ICP emission spectrometry. In this case, as a pretreatment, 200 mg of a sample is weighed, the sample is subjected to Kjeldahl wet digestion (sulfuric acid/nitric acid, sulfuric acid/hydrogen peroxide), the volume is adjusted to 50 mL, and then ICP emission analysis is conducted by an acid concentration matching one-point calibration method. The ICP emission analysis can be carried out by axial/radial photometry using an "iCAP76000uo" manufactured by Thermo Fisher Scientific.

The polyethylene terephthalate resin used in the first embodiment contains a unit derived from an isophthalic acid, and the unit derived from the isophthalic acid (hereinafter, sometimes referred to as "isophthalic acid unit") is preferably 0.5 mol% or more and 15 mol% or less of all units derived from the dicarboxylic acid component contained in the polyethylene terephthalate resin. By using such a specific polyethylene terephthalate resin, crystallization as a whole can be suppressed, and a molded article having a small molding shrinkage rate and higher impact resistance tends to be obtained.

The proportion of the isophthalic acid unit is, of all units derived from the dicarboxylic acid component, preferably 0.7 mol% or more, more preferably 0.9 mol% or more, further preferably 1.1 mol% or more, still further preferably 1.3 mol% or more, and still further preferably 1.5 mol% or more. In addition, the proportion of the isophthalic acid unit is, of all units derived from the dicarboxylic acid component, 10 mol% or less, 8.0 mol% or less, 5.0 mol% or less, 4.0 mol% or less, preferably 3.5 mol% or less, more preferably 3.0 mol% or less, further preferably 2.5 mol% or less, still further preferably 2.4 mol% or less, and may be 2.3 mol% or less or 2.0 mol% or less.

The intrinsic viscosity of the polyethylene terephthalate resin is preferably 0.50 dL/g or more, more preferably 0.53 dL/g or more, further preferably more than 0.55 dL/g, still further preferably 0.60 dL/g, still further preferably more than 0.70 dL/g, still further preferably 0.73 dL/g or more, still further preferably more than 0.76 dL/g, 0.78 dL /g or more, and preferably 0.80 dL/g or more. By setting the intrinsic viscosity to be equal to or more than the above lower limit, the impact resistance of the obtained molded article is further improved and the shrinkage rate tends to be smaller. The reason for this is inferred to be due to the fact that as the molecular weight increases, molecular entanglement tends to increase. Further, the intrinsic viscosity of the polyethylene terephthalate resin is preferably 2.0 dL/g or less, more preferably 1.5 dL/g or less, further preferably 1.2 dL/g or less, still further preferably 0.95 dL/g or less, and may be 0.85 dL/g or less. By setting the intrinsic viscosity to be equal to or less than the above upper limit, the load on the extruder and molding machine tends to be reduced without the melt viscosity during melt-kneading and molding becoming too high.

When the resin composition of the first embodiment contains two or more types of polyethylene terephthalate resins, the intrinsic viscosity is the intrinsic viscosity of the mixture.

The melt volume rate (MVR) of the polyethylene terephthalate resin measured in accordance with JIS K7210 (temperature 265°C, load 5 kgf) is 10 $cm^3$/10 minutes or more, and more preferably 20 $cm^3$/10 minutes or more, and is preferably 100 $cm^3$/10 minutes or less, and more preferably 50 $cm^3$/10 minutes or less.

Examples of acid components other than the terephthalic acid and the isophthalic acid in the polyethylene terephthalate resin used in the first embodiment include dicarboxylic acids and derivatives thereof such as naphthalene dicarboxylic acid, 4,4'-diphenylsulfonedicarboxylic acid, 4,4'-biphenyldicarboxylic acid, 1,4-cyclohexanedicarboxylic acid, 1,3-phenylenedioxydiacetic acid, structural isomers of these, malonic acid, succinic acid, and adipic acid, and oxyacids and derivatives thereof such as such as p-hydroxybenzoic acid and glycolic acid.

In the polyethylene terephthalate resin used in the first embodiment, the terephthalic acid unit and the isophthalic acid unit preferably account for, of all the dicarboxylic acid units, 80 mol% or more, more preferably 95 mol% or more, further preferably 98 mol% or more, and still further preferably 99 mol% or more.

Examples of a diol component other than ethylene glycol in the polyethylene terephthalate resin used in the first embodiment include aliphatic glycols such as 1,2-propanediol, 1,3-propanediol, 1,4-butanediol, pentamethylene glycol, hexamethylene glycol, and neopentyl glycol, alicyclic glycols such as cyclohexanedimethanol, and aromatic dihydroxy compound derivatives such as bisphenol A and bisphenol S, and the like.

In the polyethylene terephthalate resin used in the first embodiment, the ethylene glycol preferably accounts for,

of all the diol units, 80 mol% or more, more preferably 95 mol% or more, further preferably 98 mol% or more, and still further preferably 99 mol% or more.

The polyethylene terephthalate resin may be obtained by copolymerizing with, for example, 1.0 mol% or less, preferably 0.5 mol% or less, and more preferably 0.3 mol% or less, of a branching component, for example, an acid capable of forming a trifunctional ester, such as tricarballylic acid, trimellisic acid, or trimellitic acid, or a tetrafunctional ester, such as pyromellitic acid, or an alcohol capable of forming a trifunctional or tetrafunctional ester, such as glycerin, trimethylolpropane, or pentaerythritol.

In the polyethylene terephthalate resin used in the first embodiment, the terephthalic acid unit, the isophthalic acid unit, and the ethylene glycol unit preferably account for, of all the units excluding the terminals, 90 mol% or more, more preferably 95 mol% or more, further preferably 98 mol% or more, and still further preferably 99 mol% or more.

The terminal carboxyl group content of the polyethylene terephthalate resin may be appropriately selected and determined, but the terminal carboxyl group content usually 60 eq/ton or less, preferably 50 eq/ton or less, and more preferably 30 eq/ton or less. The terminal carboxyl group concentration of the polyethylene terephthalate resin is a value determined by dissolving 0.5 g of the polyethylene terephthalate resin in 25 mL of benzyl alcohol, and titrating the resultant solution using a 0.01 mol/L solution of sodium hydroxide in benzyl alcohol.

The terminal carboxyl group content can be adjusted by any conventionally known method, such as a method of adjusting polymerization conditions such as raw material charge ratio, and polymerization temperature, and pressure reduction method during polymerization, and a method of reacting with a terminal blocking agent.

As the polyethylene terephthalate resin used in the first embodiment, it is preferred to use recycled PET, in particular recycled PET derived from PET bottles.

Polyethylene terephthalate resins usually contain linear oligomers and cyclic oligomers, and the main components are cyclic trimers, cyclic tetramers, and cyclic pentamers. However, in the case of recycled PET, during the recycling process, the amount of these linear and cyclic oligomers usually decreases. Further, in particular for recycled PET derived from bottles, the PET undergoes a heating step such as a crystallization step or a solid phase polymerization step during the recycling process, and so the amount of cyclic oligomers tends to further decrease.

The recycled PET derived from PET bottles preferably has a total amount of cyclic oligomers (cyclic trimers, cyclic tetramers, cyclic pentamers) of 1.1% by mass or less, more preferably 0.9% by mass or less, further preferably 0.7% by mass or less, still further preferably 0.6% by mass or less, and particularly preferably 0.5% by mass or less. By setting this total amount to be equal to or less than the above upper limit, fogging resistance tends to be excellent, the amount of deposits on the mold surface tends to decrease, the burn time of the molded article tends to be shorter, and the adhesion properties of the molded article tend to improve. Although the lower limit is not particularly limited, 0.1% by mass or more is realistic.

Further, the cyclic trimer content in the recycled PET is preferably 0.8% by mass or less, more preferably 0.6% by mass or less, particularly preferably 0.5% by mass or less, and still further preferably 0.4% by mass or less. By setting this total amount to be equal to or less than the above upper limit, fogging resistance tends to be excellent, the amount of deposits on the mold surface tends to decrease, the burn time of the molded article tends to be shorter, and the adhesion properties of the molded article tend to improve. Although the lower limit is not particularly limited, 0.1% by mass or more is realistic.

The cyclic oligomer content is obtained by dissolving 0.1 g of the polyethylene terephthalate resin in a soluble solvent such as chloroform, dissolving and reprecipitating, filtering the supernatant liquid, and then measuring by high performance liquid chromatography (HPLC). Quantification was carried out by a single-point absolute calibration curve method, and the value was expressed in terms of DMT (dimethyl terephthalate).

As the polyethylene terephthalate resin (hereinafter, sometimes referred to as "PET"), a virgin product (hereinafter, sometimes referred to as "virgin PET"), a recycled product (hereinafter, referred to as "recycled PET"), a bio-derived product (hereinafter, sometimes referred to as "bio-PET"), and a mixture thereof can be used. It is noted that bio-PET refers to a polyethylene terephthalate resin in which at least a part of the raw material is derived from a biological resource (biomass).

Examples of the recycled PET include PET obtained through material recycling, in which collected used PET bottles and films are crushed, washed with water or an alkali, and turned into fibers for reuse, PET obtained through chemical recycling (chemical decomposition), and PET obtained through mechanical recycling.

Chemical recycling involves chemically decomposing collected used PET bottles, films, and the like, returning them to a raw material level, and resynthesizing polyethylene terephthalate resin. On the other hand, mechanical recycling is a method that makes it possible to remove dirt from polyethylene terephthalate resin more reliably than material recycling, by performing the above-mentioned alkaline cleaning in material recycling more strictly or by vacuum drying at high temperature.

For example, after removing foreign substances from used PET bottles, the bottles are crushed and washed, then pelletized using an extruder, crystallized in an environment of approximately 120 to 150°C, and then subjected to solid phase polymerization in an environment of about 210°C under a nitrogen stream or under high vacuum to obtain recycled

PET.

Examples of bio-PET include PET produced by replacing monoethylene glycol, which is a raw material for PET, with a bio-raw material derived from sugar cane.

The polyethylene terephthalate resin used in the first embodiment preferably has an absolute value of a heat of crystallization during a heating phase in a first cycle (hereinafter, sometimes referred to as "$\Delta H_{Tc1}$-1st") of less than 3 J/g. Here, one cycle is defined as an operation in which, based on JIS K7121, the temperature is increased by DSC (differential scanning calorimetry) from 40°C to 300°C at a rate of temperature increase of 20°C/min, and then the temperature is reduced to 40°C at a rate of temperature cooling of -20°C/min. That is, it is preferred that a clear crystallization temperature (Tc1-1st) during the heating phase is not exhibited. By using such a resin, moldability tends to be improved. The reason for this is inferred to be that crystallization or solidification is more likely to occur during molding.

In addition, the polyethylene terephthalate resin used in the first embodiment preferably has an absolute value of the heat of crystallization during a cooling phase in the first cycle (hereinafter sometimes referred to as "$\Delta H_{Tc2}$-1st") of 3 J/g or more. That is, it is preferred to have a clear crystallization temperature during the cooling phase (Tc2-1st). Using such a resin tends to facilitate crystallization, improve mold release properties, and improve moldability. Further, the Tc2-1st is preferably 160°C or higher, and more preferably 170°C or higher. By setting the Tc2-1st to be equal to or higher than the above lower limit, crystallization tends to be facilitated and mold release properties tend to be further improved. Further, the Tc2-1st is preferably 195°C or lower, more preferably 186°C or lower, and further preferably 183°C or lower. By setting the Tc2-1st to be equal to or lower than the above upper limit, the molding shrinkage rate tends to become smaller.

The polyethylene terephthalate resin used in the first embodiment preferably has an absolute value of the heat of crystallization ($\Delta H_{Tc1}$-1st) during the heating phase in the first cycle of less than 3 J/g and an absolute value of the heat of crystallization ($\Delta H_{Tc2}$-1st) during the cooling phase in the first cycle of 3 J/g or more. That is, it is preferred that a clear crystallization temperature during the heating phase (Tc1-1st) is not exhibited and that there is a clear crystallization temperature during the cooling phase (Tc2-1st). By using such a polyethylene terephthalate resin, the effects of improved mold release properties and improved surface appearance can be exhibited better.

The polyethylene terephthalate resin used in the first embodiment has a melting point in the first cycle (Tm-1st) of preferably 254°C or lower, more preferably 252°C or lower, further preferably 250°C or lower, and may be 245°C or lower, or 242°C or lower. By setting the melting point to be equal to or less than the above upper limit, molding can be performed at a lower resin temperature, and so moldability tends to be further improved. Further, the toughness of the resin composition tends to be improved. The lower limit is preferably 230°C or higher, and more preferably 235°C or higher. By setting the melting point to be equal to or more than the above lower limit, the mold release properties tend to be further improved. Moreover, the rigidity of the resin composition tends to be improved. When two or more melting peaks are observed, the lower temperature is taken as the melting point (Tm-1st).

The polyethylene terephthalate resin used in the first embodiment preferably has an absolute value of the heat of crystallization during the heating phase in a second cycle ("$\Delta H_{Tc1}$-2nd") of less than 3 J/g. Here, one cycle is defined as an operation in which, based on JIS K7121, the temperature is increased by DSC (differential scanning calorimetry) from 40°C to 300°C at a rate of temperature increase of 20°C/min, and then the temperature is reduced to 40°C at a rate of temperature cooling of -20°C/min. That is, it is preferred that a clear crystallization temperature (Tc1-2nd) during the heating phase is not exhibited. Having such a configuration tends to facilitate crystallization, improve mold release properties, and improve moldability.

In addition, the polyethylene terephthalate resin used in the first embodiment preferably has an absolute value of the heat of crystallization during a cooling phase in the second cycle ("$\Delta H_{Tc2}$-2nd") of 3 J/g or more. That is, it is preferred to have a clear crystallization temperature during the cooling phase (Tc2-2nd). Having such a configuration tends to facilitate crystallization, improve mold release properties, and improve moldability. Further, the crystallization temperature during the cooling phase in the second cycle (Tc2-2nd) is preferably 150°C or higher, and more preferably 160°C or higher. By setting the Tc2-2nd to be equal to or higher than the above lower limit, crystallization tends to be facilitated and mold release properties tend to be further improved. Moreover, the Tc2-2nd is preferably 190°C or lower, more preferably 185°C or lower, further preferably 180°C or lower, still further preferably 175°C or lower, and may be 170°C or lower. By setting the Tc2-2nd to be equal to or lower than the above upper limit, the molding shrinkage rate tends to become smaller.

As such a polyethylene terephthalate resin, recycled PET, in particular recycled PET derived from PET bottles, is preferred.

In addition, the polyethylene terephthalate resin used in the first embodiment preferably has an absolute value of the heat of crystallization ($\Delta H_{Tc1}$-2nd) during the heating phase in the second cycle of less than 3 J/g and an absolute value of the heat of crystallization ($\Delta H_{Tc2}$-2nd) during the cooling phase in the second cycle of 3 J/g or more. That is, it is preferred that a clear crystallization temperature during the heating phase (Tc1-2nd) is not exhibited in the second cycle, and that there is a clear crystallization temperature during the cooling phase (Tc2-2nd) in the second cycle. By using such a polyethylene terephthalate resin, the effects of improved mold release properties and improved surface appearance can be exhibited better.

The polyethylene terephthalate resin used in the first embodiment has a melting point in the second cycle

(Tm-2nd) of preferably 254°C or lower, more preferably 252°C or lower, and further preferably 250°C or lower. By setting the melting point to be equal to or less than the above upper limit, molding can be performed at a lower resin temperature, and so moldability tends to be further improved. The lower limit of the Tm-2nd is preferably 230°C or higher, and more preferably 235°C or higher. By setting the melting point to be equal to or more than the above lower limit, the mold release properties tend to be further improved. When two or more melting peaks are observed, the lower temperature is taken as the melting point (Tm-2nd).

As such a polyethylene terephthalate resin, recycled PET, in particular recycled PET derived from PET bottles, is preferred.

On the other hand, a general polyethylene terephthalate resin (for example, virgin polyethylene terephthalate resin) exhibits a clear crystallization temperature (Tc1-1st) during the heating phase in the first cycle, and the absolute value of the heat of crystallization ($\Delta H_{Tc1}$-1st) is 3 J/g or more. Further, while a general polyethylene terephthalate resin tends to exhibit a clear crystallization temperature (Tc1-2nd) during the heating phase in the second cycle, recycled polyethylene terephthalate does not tend to do so.

In addition, while a general polyethylene terephthalate resin tends not to exhibit a clear crystallization temperature (Tc2-1st) during the cooling phase in the first cycle, a recycled polyethylene terephthalate resin does tend to do so. Moreover, while a general polyethylene terephthalate resin does not tend to exhibit a clear crystallization temperature (Tc2-2nd) during the cooling phase in the second cycle, a recycled polyethylene terephthalate tends to do so.

<Resin blend ratio>

In the resin composition of the first embodiment, the mass ratio of the polybutylene terephthalate resin and the polyethylene terephthalate resin with respect to a total of 100 parts by mass of the polybutylene terephthalate resin and the polyethylene terephthalate resin is from 10/90 to 90/10. In the resin composition of the first embodiment, the proportion of the polybutylene terephthalate resin is, with respect to a total of 100 parts by mass of the polybutylene terephthalate resin and the polyethylene terephthalate resin, preferably 15 parts by mass or more, more preferably 20 parts by mass or more, further preferably 40 parts by mass or more, still further preferably more than 50 parts by mass, still further preferably 55 parts by mass or more, still further preferably 60 parts by mass or more, still further preferably 65 parts by mass or more, and particularly preferably 70 parts by mass or more. Further, in the resin composition of the first embodiment, the proportion of the polybutylene terephthalate resin is, with respect to a total of 100 parts by mass of the polybutylene terephthalate resin and the polyethylene terephthalate resin, preferably 85 parts by mass or less, and more preferably 82 parts by mass or less.

The total amount of the polybutylene terephthalate resin and the polyethylene terephthalate resin in the resin composition of the first embodiment is preferably 50% by mass or more, more preferably 70% by mass or more, further preferably 75% by mass or more, still further preferably 80% by mass or more, and still further 85% by mass or more. Setting the total amount to be equal to or more than the above lower limit is preferred because molding processability (mold release properties) is excellent, and the molded article obtained by molding the resin composition has better impact resistance and mechanical properties. In addition, the mold release properties of the molded article are better, so that the surface appearance tends to be further improved. Further, the total amount of the polybutylene terephthalate resin and the polyethylene terephthalate resin in the resin composition of the first embodiment is preferably 99% by mass or less, and more preferably 95% by mass or less. By setting the total amount to be equal to or less than the above upper limit, heat resistance tends to be improved.

The resin composition of the first embodiment may contain only one type, or two or more types, of the polybutylene terephthalate resin and the polyethylene terephthalate resin, respectively. When two or more types are included, the total amount is preferably within the ranges described above.

<Content of elemental iron in resin composition>

In the resin composition of the first embodiment, the content of the elemental iron is, among the components other than the non-fibrous inorganic filler in the resin composition, preferably from 0.1 to 90 μg/g. By setting the content in this range, the effects of this invention tend to be exhibited more effectively.

The amount of the elemental iron in the resin used in the first embodiment is, among the components other than the non-fibrous inorganic filler in the resin composition, preferably 0.2 μg/g or more, more preferably 0.3 μg/g or more, further preferably 0.4 μm/g or more, still further preferably 0.45 μg/g or more, and still further 0.5 μg/g or more. In addition, the amount of the elemental iron is, among the content of the components other than the non-fibrous inorganic filler in the resin composition, preferably 80 μg/g or less, more preferably 60 μg/g or less, further preferably 30 μg/g or less, still further preferably 10 μg/g or less, still further preferably 3.0 μg/g or less, still further preferably 1.0 μg/g or less, and particularly further preferably 0.8 μg/g or less.

The elemental iron in the components other than the non-fibrous inorganic filler in the resin composition is usually

derived from the polyethylene terephthalate resin.

<Inorganic filler>

The resin composition of the first embodiment further contains an inorganic filler. By including the inorganic filler, the mechanical strength of the molded article obtained is improved. The inorganic filler may be a non-fibrous inorganic filler or a fibrous inorganic filler. In the first embodiment, a non-fibrous inorganic filler is preferred.

In the resin composition of the first embodiment, a content of the inorganic filler is, with respect to a total of 100 parts by mass of the polybutylene terephthalate resin and the polyethylene terephthalate resin, preferably 1.0 parts by mass or more, more preferably 1.5 parts by mass or more, further preferably 2.0 parts by mass or more, still further preferably 2.5 parts by mass or more, still further preferably 3.0 parts by mass or more, still further preferably 3.5 parts by weight or more, and particularly preferably 4.0 parts by weight or more.

The upper limit of the content of the inorganic filler is, with respect to the total of 100 parts by mass of the polybutylene terephthalate resin and polyethylene terephthalate resin, preferably 150 parts by mass or less, more preferably 100 parts by mass or less, further preferably 80 parts by mass or less, still further preferably 50 parts by mass or less, still further preferably 30 parts by mass or less, still further preferably 15 parts by mass or less, particularly 10 parts by mass or less. and particularly further preferably 8.0 parts by mass or less.

<<Non-fibrous inorganic filler>>

The resin composition of the first embodiment preferably contains a non-fibrous inorganic filler. By including the fibrous inorganic filler, the mechanical strength of the molded article obtained tends to be improved, and the molding shrinkage rate can also be effectively reduced.

Here, non-fibrous inorganic filler refers to an inorganic filler in a shape other than fibers, which is preferably a platelike inorganic filler or a particulate inorganic filler, and more preferably a particulate inorganic filler.

Examples of the non-fibrous inorganic filler include calcium carbonate, silica, wollastonite, zirconium silicate, clay, bentonite, hydrotalcite, calcium sulfate, barium carbonate, magnesium carbonate, magnesium sulfate, calcium silicate, alumina, glass beads, glass flakes, titanium oxide, zinc oxide, magnesium oxide, calcium titanate, magnesium titanate, barium titanate, and the like, but calcium carbonate and zirconium silicate are preferred, and calcium carbonate is more preferred. Calcium carbonate is particularly preferred because it tends to be improved the appearance of the molded article.

Further, it is preferred that the surface of the non-fibrous inorganic filler used in the first embodiment has been treated with an acid, and more preferably the surface has been treated with a fatty acid.

Examples of the acid used in the acid treatment include a fatty acid, a rosin acid, and a lignic acid, and a saturated or an unsaturated fatty acid having from 6 to 20 carbon atoms is preferred. Examples of the saturated or the unsaturated fatty acid having from 6 to 20 carbon atoms include stearic acid, palmitic acid, lauric acid, oleic acid, linoleic acid, and the like.

The non-fibrous inorganic filler used in the first embodiment preferably has a volume-based average primary particle size of 5 μm or less, more preferably 3 μm or less, further preferably 1 μm or less, still further 0.8 μm or less, still further preferably 0.5 μm or less, and particularly preferably 0.3 μm or less. The lower limit of the volume-based average primary particle size is preferably 0.01 μm or more, and more preferably 0.08 μm or more. The volume-based average primary particle size in the first embodiment is calculated based on a specific surface area analyzed from a gas adsorption isotherm based on the assumption that the particle shape is a sphere.

Even when the non-fibrous inorganic filler is other than particulate, the particle size in the first embodiment is based on the assumption that the particles have the same volume.

The content of the non-fibrous inorganic filler in the resin composition of the first embodiment is, with respect to a total of 100 parts by mass of the polybutylene terephthalate resin and the polyethylene terephthalate resin, 1.0 parts by mass or more, preferably 1.5 parts by mass or more, more preferably 2.0 parts by mass or more, further preferably 2.5 parts by mass or more, still further preferably 3.0 parts by mass or more, still further 3.5 parts by mass or more, and still further preferably 4.0 parts by mass or more. By setting the content to be equal to or more than the above lower limit, there tends to be further improvement in the effects of improving rigidity and heat resistance, reducing shrinkage during molding, and reducing anisotropy. Further, the upper limit of the content of the non-fibrous inorganic filler is, with respect to a total of 100 parts by mass of the polybutylene terephthalate resin and the polyethylene terephthalate resin, 100 parts by mass or less, preferably 90 parts by mass or less, more preferably 80 parts by mass or less, further preferably 50 parts by mass or less, still further preferably 30 parts by mass or less, still further preferably 15 parts by mass or less, still further preferably 10 parts by mass or less, and particularly further preferably 8.0 parts by mass or less. By setting the content to be equal to or less than the above upper limit, the surface appearance of the molded article tends to be improved.

When the resin composition of the first embodiment includes a non-fibrous inorganic filler, the content thereof is,

of the resin composition, preferably 0.5% by mass or more, more preferably 1.0% by mass or more, further preferably 1.5% by mass or more, still further preferably 2.0% by mass or more, still further preferably 2.5% by mass or more, and particularly preferably 3.0% by mass or more. By setting the content to be equal to or more than the above lower limit, there tends to be further improvement in the effects of improving rigidity and heat resistance, reducing shrinkage during molding, and reducing anisotropy. Further, the content of the non-fibrous inorganic filler is, of the resin composition, preferably 15% by mass or less, more preferably 10% by mass or less, and particularly preferably 7.0% by mass or less. By setting the content to be equal to or less than the above upper limit, the surface appearance of the molded article tends to be improved.

The resin composition of the first embodiment may contain only one type of the non-fibrous inorganic filler, or may contain two or more types of the non-fibrous inorganic filler. When two or more types are included, the total amount is preferably within the ranges described above.

<Other components>

The resin composition of the first embodiment may optionally include other components in addition to those described above, as long as the various desired physical properties are not significantly impaired. Examples of other components include other thermoplastic resins such as a styrene-based resin and various resin additives. In addition, the resin composition may contain one type of such other components, or contain two or more types in any combination and ratio.

Examples of resin additives include a mold release agent, a stabilizer (thermal stabilizer, light stabilizer), a colorant (pigment, dye), a reactive compound, a fibrous inorganic filler, a nucleating agent, a flame retardant, flame retardant aid, a filler, an antistatic agent, an antifogging agent, an antiblocking agent, a fluidity improver, a plasticizer, a dispersant, an antibacterial agent, and the like.

In the resin composition of the first embodiment, the total amount of the polybutylene terephthalate resin, the polyethylene terephthalate resin, and optionally-added components is 100% by mass.

<<Styrene-based resin>>

The resin composition of the first embodiment may include a styrene-based resin.

Examples of the styrene-based resin include a homopolymer of a styrene-based monomer, a copolymer of a styrene-based monomer and a monomer copolymerizable with the styrene-based monomer, and the like. Examples of the styrene-based monomer include styrene, $\alpha$-methylstyrene, chlorostyrene, methylstyrene, and tert-butylstyrene. In the styrene-based resin in the first embodiment, 50 mol% or more of the monomer units are a styrene-based monomer.

More specifically, examples of the styrene-based resin include resins such as polystyrene resin, an acrylonitrile-styrene copolymer (AS resin), high-impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), an acrylonitrile-ethylenepropylene rubber-styrene copolymer (AES resin), and a styrene-IPN type rubber copolymer.

In the first embodiment, the styrene-based resin is preferably an acrylonitrile-styrene copolymer (AS resin), high-impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), or an acrylonitrile-ethylenepropylene rubber-styrene copolymer (AES resin), and more preferably is an acrylonitrile-styrene copolymer (AS resin).

The content of the styrene monomer in the acrylonitrile-styrene copolymer (AS resin) is preferably from 50 to 95% by mass, and more preferably from 65 to 92% by mass.

The weight average molecular weight of the styrene-based resin is usually 50,000 or more, preferably 100,000 or more, and more preferably 150,000 or more, and usually 500,000 or less, preferably is 400,000 or less, and more preferably 300,000 or less. Further, the number average molecular weight is usually 10,000 or more, preferably 30,000 or more, and more preferably 50,000 or more, and preferably 500,000 or less, and more preferably 300,000 or less.

The melt flow rate (MFR) of the styrene-based resin measured in accordance with JIS K7210 (temperature 200°C, load 5 kgf) is preferably from 0.1 to 30 g/10 minutes, and more preferably from 0.5 to 25 g/10 minutes. When the MFR is 0.1 g/10 minutes or more, fluidity tends to improve, and when the MFR is 30 g/10 minutes or less, impact resistance tends to improve.

Examples of a method for producing such a styrene-based resin include known methods, such as emulsion polymerization, solution polymerization, suspension polymerization, and bulk polymerization.

Details regarding the styrene-based resin may be found in the descriptions in paragraphs 0061 to 0069 of Japanese Patent Laid-Open No. 2017-052925 A and the descriptions in paragraphs 0021 to 0031 and paragraphs 0057 to 0064 of Japanese Patent Laid-Open No. 2017-052262 A.

When the resin composition of the first embodiment includes a styrene-based resin, the content thereof is, with

respect to a total of 100 parts by mass of the polybutylene terephthalate resin and the polyethylene terephthalate resin, preferably 0.1 parts by mass or more, more preferably 0.5 parts by mass or more, further preferably 1.0 parts by mass or more, still further preferably 2.0 parts by mass or more, and still further preferably 3.0 parts by mass or more. By setting the content to be equal to or more than the above lower limit, the effects of reducing the shrinkage rate and suppressing appearance defects tend to be further improved. Further, the upper limit of the content of the styrene-based resin is, with respect to the total of 100 parts by mass of the polybutylene terephthalate resin and the polyethylene terephthalate resin, preferably 20 parts by mass or less, more preferably 15 parts by mass or less, further preferably 10 parts by mass or less, still further preferably 8.0 parts by mass or less, and still further preferably 6.0 parts by mass or less. By setting the content to be equal to or less than the above upper limit, the effect of suppressing a decrease in weld strength and impact strength tends to be further improved.

The resin composition of the first embodiment may contain only one type of the styrene-based resin, or may contain two or more types of the styrene-based resin. When the resin composition contains two or more types, the total amount is preferably within the ranges described above.

<<Mold release agent>>

The resin composition of the first embodiment may include a mold release agent. Examples of the mold release agent include a montanic acid ester wax, a polyolefin wax, a higher fatty acid, an ester compound, ethylene bisstearoamide, and the like, and it is preferred to select at least one from a montanic acid ester wax, a polyolefin wax, and ethylene bisstearoamide.

Specific details regarding the mold release agent may be found in the descriptions in paragraphs 0063 to 0077 of Japanese Patent Laid-Open No. 2018-070722 A and the descriptions in paragraphs 0090 to 0098 of Japanese Patent Laid-Open No. 2019-123809 A.

When the resin composition of the first embodiment includes a mold release agent, the content thereof is, with respect to a total of 100 parts by mass of the polybutylene terephthalate resin and the polyethylene terephthalate resin, preferably 0.01 parts by mass or more, and more preferably 0.08 parts by mass or more. By setting the content to be equal to or more than the above lower limit, mold release properties during molding tend to improve. Further, the upper limit of the content of the mold release agent is, with respect to a total of 100 parts by mass of the polybutylene terephthalate resin and the polyethylene terephthalate resin, preferably 5.0 parts by mass or less, more preferably 1.0 parts by mass or less, further preferably 0.7 parts by mass or less, and may be 0.5 parts by mass or less. By setting the content to be equal to or less than the above upper limit, it tends to be possible to suppress a decrease in hydrolysis resistance and to reduce mold contamination and the amount of outgases during injection molding.

The resin composition of the first embodiment may contain only one type of the mold release agent, or may contain two or more types of the mold release agent. When the resin composition contains two or more types, the total amount is preferably within the ranges described above.

<<Stabilizer>>

The resin composition of the first embodiment may include a stabilizer (light stabilizer and/or heat stabilizer).

Examples of the stabilizer include a hindered phenol compound, a hindered amine compound, a phosphorus compound, a sulfur stabilizer, and the like. In the first embodiment, it is also preferred to use a hindered phenol compound, a phosphorus compound, and a sulfur stabilizer in combination. By using three types of stabilizers in combination in this way, thermal stability is further improved, and the thermal stability tends to continue for a long period of time.

Specific details regarding the stabilizer may be found in the description in paragraphs 0067 to 0075 of Japanese Patent Laid-Open No. 2021-063196 A, the descriptions in paragraphs 0046 to 0057 of Japanese Patent Laid-Open No. 2018-070722 A, the descriptions in paragraphs 0030 to 0037 of Japanese Patent Laid-Open No. 2019-056035 A, and the descriptions in paragraphs 0066 to 0078 of International Publication No. WO 2017/038949.

When the resin composition of the first embodiment includes a stabilizer, the content thereof is, with respect to a total of 100 parts by mass of the polybutylene terephthalate resin and the polyethylene terephthalate resin, preferably 0.01 parts by mass or more, and more preferably 0.05 parts by mass or more. By setting the content to be equal to or more than the above lower limit, there tends to be an improvement in the effect of suppressing thermal deterioration and oxidative deterioration of the resin during melt-kneading, molding, and use as a molded article. Further, the upper limit of the content of the stabilizer is, with respect to a total of 100 parts by mass of the polybutylene terephthalate resin and the polyethylene terephthalate resin, preferably 2.0 parts by mass or less, and more preferably 1.5 parts by mass or less. By setting the content to be equal to or less than the above upper limit, it is possible to effectively suppress adverse effects on appearance and physical properties caused by the aggregation of additives such as the stabilizer.

The resin composition of the first embodiment may contain only one type of the stabilizer, or may contain two or more types of the stabilizer. When the resin composition contains two or more types, the total amount is preferably within

the ranges described above.

<<Colorant>>

The resin composition of the first embodiment may include a colorant (dye and/or pigment). The colorant may be a dye or a pigment, but a pigment is preferred.
The colorant may be either an organic colorant or an inorganic colorant. Further, the colorant may be either a chromatic colorant or an achromatic colorant.
Examples of the colorant include the descriptions in paragraphs 0121 to 0123 of Japanese Patent Laid-Open No. 2021-101020 A and the descriptions in paragraphs 0088 to 0090 of Japanese Patent Laid-Open No. 2019-188393 A.
The resin composition of the first embodiment preferably contains carbon black. There are no restrictions on the type, raw material, or production method of the carbon black, and any of furnace black, channel black, acetylene black, Ketjen black, and the like can be used. Among these, furnace black is preferred. There is no particular restriction on the number average particle size, but about 5 to 60 nm is preferred.
The carbon black preferably has a DBP oil absorption amount (unit: $cm^3$/100 g) of from 40 to 300 $cm^3$/100 g. The upper limit is preferably 300 $cm^3$/100 g or less, more preferably 200 $cm^3$/100 g or less, further preferably 150 $cm^3$/100 g or less, and may be 100 $cm^3$/100 g or less. Further, the lower limit is preferably 40 $cm^3$/100 g or more, more preferably 50 $cm^3$/100 g or more, and further preferably 60 $cm^3$/100 g or more. By setting the DBP oil absorption amount to within the above upper and lower limits, the appearance of the molded article tends to be improved. The DBP oil absorption amount (unit: $cm^3$/100 g) can be measured in accordance with JIS K6217.
The carbon black preferably has a number average particle size of from 5 to 60 nm. The upper limit is preferably 60 nm or less, more preferably 40 nm or less, further preferably 30 nm or less, and still further preferably 25 nm or less. The lower limit is preferably 10 nm or more, more preferably 13 nm or more, further preferably 16 or more, and still further preferably 19 nm or more. By setting the number average particle size to be within the above upper and lower limits, the appearance of the molded article tends to be improved. The number average particle size can be determined by acquiring an enlarged aggregate image according to the procedure described in the ASTM D3849 standard (Standard test method for carbon black - Morphological characterization by electron microscopy), measuring the particle size of 3,000 particles from this aggregate image, and taking the arithmetic average thereof.
By blending the carbon black as a masterbatch in advance with a thermoplastic resin, preferably a polyester resin such as a polybutylene terephthalate resin or a polystyrene-based resin, the degree of dispersion of the carbon black tends to increase and the appearance of the molded article tends to be improved. Further, it is preferred to use a polystyrene-based resin because jet blackness tends to be improved.
When the resin composition of the first embodiment includes a colorant (preferably carbon black), the content thereof is, with respect to a total of 100 parts by mass of the polybutylene terephthalate resin and the polyethylene terephthalate resin, preferably 0.01 parts by mass or more, more preferably 0.05 parts by mass or more, further preferably 0.1 parts by mass or more, and still further preferably 0.5 parts by mass or more. By setting the content to be equal to or more than the above lower limit, the coloring effect can be more effectively exhibited. Further, the upper limit of the content of the colorant is, with respect to a total of 100 parts by mass of the polybutylene terephthalate resin and the polyethylene terephthalate resin, preferably 4 parts by mass or less, more preferably 3 parts by mass or less, further preferably 2 parts by mass or less, and still further preferably 1 part by mass or less. By setting the content to be equal to or less than the above upper limit, the mechanical strength of the molded article obtained tends to be further improved.
The resin composition of the first embodiment may contain only one type of colorant, or may contain two or more types of colorant. When the resin composition contains two or more types, the total amount is preferably within the ranges described above.

<<Reactive compound>>

The resin composition of the first embodiment may include a reactive compound. The reactive compound is preferably one or more types selected from the group consisting of a carbodiimide compound, an epoxy compound, a compound having an oxazoline group (ring), a compound having an oxazine group (ring), a compound having a carboxylic acid, and a compound having an amide group. An epoxy compound is particularly preferred because hydrolysis resistance tends to be improved and outgassing tends to be suppressed.
The epoxy compound may be a monofunctional epoxy compound or a polyfunctional epoxy compound, but a polyfunctional epoxy compound is preferred. Examples of the polyfunctional epoxy compound include a bisphenol A type epoxy compound, a bisphenol F type epoxy compound, a resorcin type epoxy compound, a novolak type epoxy compound, an alicyclic compound type diepoxy compound, a glycidyl ether, and epoxidized polybutadiene. More specifically, any alicyclic compound type epoxy compound, such as a bisphenol A type epoxy compound, a bisphenol F type epoxy compound, a resorcin type epoxy compound, a novolak type epoxy compound, vinylcyclohexene dioxide,

and dicyclopentadiene oxide, can be preferably used.

Further, the epoxy compound may be a copolymer having a glycidyl group-containing compound as a constituent component. Examples thereof may include a copolymer of a glycidyl ester of an $\alpha,\beta$-unsaturated acid with one or more monomers selected from the group consisting of an $\alpha$-olefin, an acrylic acid, an acrylic ester, a methacrylic acid, a methacrylic ester, and styrene.

In addition, the epoxy compound is preferably a copolymer of an epoxy group-containing monomer and a styrene-based monomer, and may be a copolymer with another copolymerizable monomer. Examples of the styrene-based monomer constituting the copolymer of an epoxy group-containing monomer and a styrene-based monomer include glycidyl (meth)acrylate, glycidyl itaconate, and the like, Glycidyl methacrylate and glycidyl acrylate are preferred, and glycidyl methacrylate is particularly preferred. Examples of the styrene-based monomer include styrene, $\alpha$-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, tribromostyrene, and the like. Styrene and $\alpha$-methylstyrene are more preferred, and styrene is particularly preferred. Specific examples of the copolymer of an epoxy group-containing monomer and a styrene-based monomer include a glycidyl (meth)acrylate-styrene copolymer, a glycidyl (meth)acrylatestyrene-methyl (meth)acrylate, and the like, which are particularly preferred because outgassing tends to be suppressed.

Other than the above, details regarding the reactive compound may be found in the descriptions in paragraphs 0038 to 0050 of Japanese Patent Laid-Open No. 2020-199755 A and paragraph 0043 of Japanese Patent Laid-Open No. 2020-125468 A.

When the resin composition of the first embodiment includes a reactive compound, the content thereof is, with respect to a total of 100 parts by mass of the polybutylene terephthalate resin and the polyethylene terephthalate resin, preferably 0.01 parts by mass or more, and more preferably 0.05 parts by mass or more. Further, the upper limit of the content of the reactive compound is, with respect to a total of 100 parts by mass of the polybutylene terephthalate resin and the polyethylene terephthalate resin, preferably 15 parts by mass or less, more preferably 10 parts by mass or less, further preferably 7.0 parts by mass or less, still further preferably 2.0 parts by mass or less, particularly preferably 1.0 parts by mass or less, and may be 0.5 parts by mass or less or 0.1 parts by mass or less.

The resin composition of the first embodiment may contain only one type of the reactive compound, or may contain two or more types of the reactive compound. When the resin composition contains two or more types, the total amount is preferably within the ranges described above.

<<Nucleating agent>>

The resin composition of the first embodiment may include a nucleating agent in order to adjust the crystallization rate. The type of the nucleating agent is not particularly limited, and examples thereof may include an organic nucleating agent such as a fatty acid metal salt, a phosphate, an aromatic phosphonate, a polyhydric alcohol, a fatty acid amide, and a copolymers of an olefin and maleic acid, as well as an inorganic nucleating agent.

Examples of the fatty acid metal salt include lithium stearate, barium stearate, zinc stearate, sodium stearate, calcium stearate, magnesium stearate, aluminum stearate, calcium 12-hydroxystearate, zinc 12-hydroxystearate, magnesium 12-hydroxystearate, aluminum 12-hydroxystearate, barium 12-hydroxystearate, lithium 12-hydroxystearate, sodium 12-hydroxystearate, sodium montanate, calcium montanate, lithium montanate, zinc montanate, magnesium montanate, aluminum montanate, calcium laurate, barium laurate, zinc laurate, lithium laurate, sodium laurate, calcium ricinoleate, barium ricinoleate, zinc ricinoleate, potassium caprylate, sodium caprylate, calcium caprylate, magnesium caprylate, aluminum octylate, zinc myristate, zinc palmitate, sodium dimethyl sulfoisophthalate, and the like.

Among these fatty acid metal salts, from the viewpoint of high fat solubility and easy compatibility with polyester, 12-hydroxystearate, stearate, and montanate are preferred, and magnesium stearate and sodium montanate are particularly preferred.

As the inorganic nucleating agent, talc, boron nitride, mica, kaolin, barium sulfate, silicon nitride, and molybdenum disulfide are preferred, barium sulfate, talc, and boron nitride are more preferred, barium sulfate and talc are further preferred, and talc is still further preferred.

Details regarding other nucleating agents may be found in the descriptions in paragraphs 0045 to 0051 of Japanese Patent Laid-Open No. 2022-142501.

When the resin composition of the first embodiment includes a nucleating agent, the content thereof is, with respect to a total of 100 parts by mass of the polybutylene terephthalate resin and the polyethylene terephthalate resin, preferably 0.01 parts by mass or more, more preferably 0.1 parts by mass or more, and further preferably 0.2 parts by mass or more. The upper limit of the content is, with respect to 100 parts by mass of the crystalline thermoplastic resin, preferably 10 parts by mass or less, more preferably 8 parts by mass or less, further preferably 6 parts by mass or less, still further preferably 4 parts by mass or less, still further preferably 2 parts by mass or less, and may be 1 part by mass or less or 0.8 parts by mass or less.

The resin composition of the first embodiment may contain only one type of the nucleating agent, or may contain two or more types of the nucleating agent. When the resin composition contains two or more types, the total amount is preferably within the ranges described above.

<Method for producing resin composition>

The resin composition of the first embodiment can be produced by a conventional method for preparing resin compositions. Usually, each component and the various additives to be optionally added are thoroughly mixed together, and then melt-kneaded using a single-screw or twin-screw extruder. Alternatively, the resin composition of the first embodiment can be prepared without mixing each component in advance, by pre-mixing only a part of the components, and feeding the mixture into an extruder using a feeder, and melt-kneading. Also, a masterbatch may be prepared by melt-kneading a part of the components such as the colorant with a thermoplastic resin, and then adding the remaining components and melt-kneading the mixture.

In addition, when using an inorganic filler, it is preferred to feed the inorganic filler from a side feeder at a point along the cylinder of the extruder.

The heating temperature during melt-kneading can be normally selected as appropriate from the range of 220 to 300°C. If the temperature is too high, decomposition gas tends to be generated, which may cause opacity. Therefore, it is desirable to select a screw configuration that takes shear heat generation into consideration. In order to suppress decomposition during the kneading and subsequent molding, it is desirable to use an antioxidant and a heat stabilizer.

<Method for producing molded article>

The resin composition of the first embodiment is molded according to a known method.

The method for producing the molded article is not particularly limited, and any molding method commonly used for resin compositions can be adopted. Examples include injection molding, ultra-high-speed injection molding, injection compression molding, two-color molding, gas-assisted blow molding, molding using a heat-insulated mold, molding using a rapid heating mold, foam molding (including supercritical fluid), insert molding, IMC (in-mold coating molding) molding, extrusion molding, sheet molding, thermoforming, rotational molding, lamination molding, press molding, blow molding, and the like, among which an injection molding method is preferred.

Details regarding the injection molding method may be found in the descriptions in paragraphs 0113 to 0116 of Japanese Patent Laid-Open No. 6183822 B.

Further, the mold temperature during mold molding such as injection molding is preferably from 40 to 150°C.

<Uses>

The resin composition of the first embodiment is used as a molded article formed from the resin composition. The use of the resin composition or molded article is not particularly limited, but may be preferably used for a vehicle component or an electric/electronic component.

Examples of the vehicle component include a lamp housing, a reflector, a bezel, an extension, and the like.

Examples of the electric/electronic component include a personal computer, a game console, a display device such as a television, a printer, a copy machine, a scanner, a fax machine, an electronic notebook or PDA, an electronic desk calculator, an electronic dictionary, a camera, a video camera, a mobile phone, a battery pack, a drive or reading device of a recording medium, a mouse, a number pad, a housing of a CD player, a MD player, or a portable radio/audio player, a cover, a keyboard, a button, a switch member, and the like.

Among these, a vehicle lamp component is particularly preferred.

2. Second embodiment

The resin composition of the second embodiment is characterized by including from 1 to 50 parts by mass of a flame retardant with respect to a total of 100 parts by mass of a polybutylene terephthalate resin and a polyethylene terephthalate resin, wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and the polyethylene terephthalate resin contains from 1.0 to 100 μg/g of elemental iron.

With such a configuration, a resin composition can be obtained that not only has flame retardance, but also has excellent adhesive strength with other members. Moreover, a resin composition capable of providing a molded article having a high tensile strength can be obtained. In the second embodiment, by using a polyethylene terephthalate resin containing a trace amount of elemental iron, it is inferred that adhesive strength is improved because the elemental iron selectively reacts with organic compounds that inhibit curing of the adhesive. It is also inferred that tensile strength

increases due to crystallization being promoted.

<Polybutylene terephthalate resin>

The resin composition of the second embodiment includes a polybutylene terephthalate resin.

The details of the polybutylene terephthalate resin used in the resin composition of the second embodiment are the same as described in <Polybutylene terephthalate resin> in the first embodiment, and that description may be referred to.

<Polyethylene terephthalate resin>

The resin composition of the second embodiment includes a polyethylene terephthalate resin. The polyethylene terephthalate resin used in the second embodiment is a resin having a dicarboxylic acid and a diol as main constituent units.

In the second embodiment, the amount of the elemental iron contained in the polyethylene terephthalate resin is from 1.0 to 100 μg/g. By setting the amount to be equal to or more than the above lower limit, the adhesive strength tends to be improved, and the burn time of the molded article tends to be shorter. By setting the amount to be equal to or less than the above upper limit, electrical insulation properties tend to be maintained.

The details of the polyethylene terephthalate resin used in the resin composition of the second embodiment are the same as described in <Polyethylene terephthalate resin> in the first embodiment, and that description may be referred to.

<Resin blend ratio>

In the resin composition of the second embodiment, the mass ratio of the polybutylene terephthalate resin and the polyethylene terephthalate resin with respect to a total of 100 parts by mass of the polybutylene terephthalate resin and the polyethylene terephthalate resin is from 10/90 to 90/10. In the resin composition of the second embodiment, the proportion of the polybutylene terephthalate resin is, with respect to a total of 100 parts by mass of the polybutylene terephthalate resin and the polyethylene terephthalate resin, preferably 15 parts by mass or more, more preferably 20 parts by mass or more, further preferably 40 parts by mass or more, and still further preferably more than 50 parts by mass. Further, in the resin composition of the second embodiment, the proportion of the polybutylene terephthalate resin is, with respect to a total of 100 parts by mass of the polybutylene terephthalate resin and the polyethylene terephthalate resin, preferably 85 parts by mass or less, and more preferably 82 parts by mass or less, further preferably 80 parts by mass or less, still further preferably 75 parts by mass or less, still further preferably 70 parts by mass or less, still further preferably 65 parts by mass or less, and still further preferably 60 parts by mass or less.

The total amount of the polybutylene terephthalate resin and the polyethylene terephthalate resin in the resin composition of the second embodiment is preferably 30% by mass or more, more preferably 35% by mass or more, further preferably 40% by mass or more, still further preferably 45% by mass or more, and still further 49% by mass or more. Setting the total amount to be equal to or more than the above lower limit is preferred because molding processability (mold release properties) is excellent, and the molded article obtained by molding the resin composition has better impact resistance and mechanical properties. In addition, the mold release properties of the molded article are better, so that the surface appearance tends to be further improved. Further, the total amount of the polybutylene terephthalate resin and the polyethylene terephthalate resin in the resin composition of the second embodiment is preferably 99% by mass or less, and more preferably 95% by mass or less. In particular, when including an inorganic filler, the total amount of the polybutylene terephthalate resin and the polyethylene terephthalate resin is preferably 80% by mass or less, more preferably 70% by mass or less, and further preferably 65% by mass or less. By setting the total amount to be equal to or less than the above upper limit, heat resistance tends to be improved.

The resin composition of the second embodiment may contain only one type, or two or more types, of the polybutylene terephthalate resin and the polyethylene terephthalate resin, respectively. When two or more types are included, the total amount is preferably within the ranges described above.

<Flame retardant>

The resin composition of the second embodiment includes a flame retardant. By including the flame retardant, flame retardance can be achieved. Examples of the flame retardant include a halogen-based flame retardant, a phosphorus-based flame retardant (metal phosphinate, melamine polyphosphate, etc.), a nitrogen-based flame retardant (melamine cyanurate, etc.), a metal hydroxide (magnesium hydroxide, etc.), and the like. However, a phosphorus-based flame retardant or a halogen-based flame retardant is preferred, and a halogen-based flame retardant is more preferred.

As the phosphorus-based flame retardant, a phosphinate metal salt is more preferred. As the halogen flame retardant, a bromine-based flame retardant is more preferred.

When using a bromine-based flame retardant as the flame retardant, the type thereof is not particularly limited, but a brominated phthalimide, a brominated poly(meth) acrylate, a brominated polycarbonate, a brominated epoxy, or a brominated polystyrene is preferred, a brominated poly(meth)acrylate, a brominated polycarbonate, or a brominated epoxy is more preferred, and a brominated epoxy is further preferred.

The brominated phthalimide is preferably represented by formula (1),

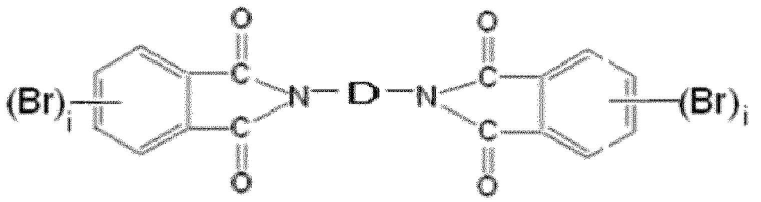

(1)

wherein D represents a group composed of a combination of two or more of an alkylene group, an arylene group, $-S(=O)_2-$, -C(=O)-, and -O-; and i is an integer of from 1 to 4.

In formula (1), D represents a group composed of a combination of two or more of alkylene group, arylene group, $-S(=O)_2-$, -C(=O)-, and -O-, preferably a group composed of a combination of an alkylene group or an arylene group and at least one of $-S(=O)_2-$, - C(=O)-, and -O-, more preferably a group composed of a combination of an alkylene group or an arylene group and one of $-S(=O)_2-$, - C(=O)-, and -O-, and further preferably is an arylene group.

The meaning of a group composed of a combination of an alkylene group and -O- is, for example, a combination of two alkylene groups and one -O- (the same applies to the other combinations).

The alkylene group as D is preferably an alkylene group having from 1 to 6 carbon atoms, and more preferably a methylene group, an ethylene group, a propylene group, or a butylene group. The arylene group is preferably a phenylene group.

i is an integer of from 1 to 4, and is preferably 4.

Examples of the brominated phthalimide represented by formula (1) include N,N'-(bistetrabromophthalimide) ethane, N,N'-(bistetrabromophthalimide)propane, N,N'-(bistetrabromophthalimide)butane, N,N'-(bistetrabromophthalimide)diethyl ether, N,N'-(bistetrabromophthalimide)dipropyl ether, N,N'-(bistetrabromophthalimide)dibutyl ether, N,N'-(bistetrabromophthalimide)diphenyl sulfone, N,N'-(bistetrabromophthalimide)diphenyl ketone, N,N'-(bistetrabromophthalimide)diphenyl ether, and the like.

The brominated phthalimide represented by formula (1) is preferably a brominated phthalimide represented by formula (2),

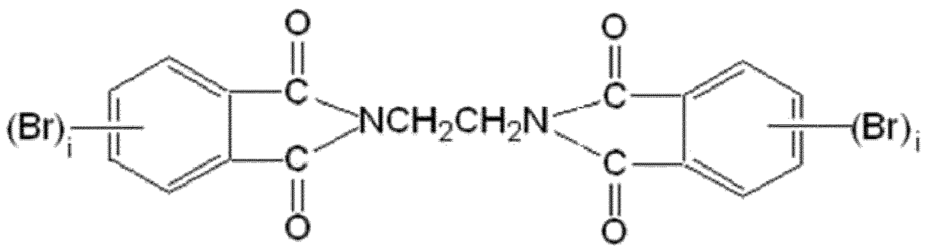

(2)

wherein i is an integer of from 1 to 4.

i is an integer of from 1 to 4, and is preferably 4.

The brominated poly(meth)acrylate is preferably a polymer obtained by polymerizing a bromine atom-containing benzyl (meth)acrylate alone, copolymerizing two or more types of bromine atom-containing benzyl (meth)acrylate, or copolymerizing a bromine atom-containing benzyl (meth)acrylate with another vinyl monomer. The bromine atom is preferably attached to the benzene ring, and the number of bromine atoms attached is from 1 to 5, preferably 4 to 5, per benzene ring.

Examples of the bromine atom-containing benzyl acrylate include pentabromobenzyl acrylate, tetrabromobenzyl acrylate, tribromobenzyl acrylate, and mixtures thereof. Further, examples of the bromine atom-containing benzyl methacrylate include the methacrylate corresponding to the above-mentioned acrylates.

Specific examples of the other vinyl monomer used to copolymerize with bromine atom-containing benzyl (meth) acrylate include acrylic acid esters such as acrylic acid, methyl acrylate, ethyl acrylate, butyl acrylate, and benzyl acrylate,

methacrylic acid esters such as methacrylic acid, methyl methacrylate, ethyl methacrylate, butyl methacrylate, and benzyl methacrylate; unsaturated carboxylic acids or anhydrides thereof such as styrene, acrylonitrile, fumaric acid, and maleic acid; vinyl acetate, vinyl chloride, and the like.

These are usually used in an amount equal to or less than the molar amount of the bromine atom-containing benzyl (meth)acrylate, and of that, preferably in an amount not more than 0.5 times the molar amount.

As the vinyl monomer, xylene diacrylate, xylene dimethacrylate, tetrabromoxylene diacrylate, tetrabromoxylene dimethacrylate, butadiene, isoprene, divinylbenzene, and the like can be used, and these can usually be used in an amount of 0.5 times or less by molar amount with respect to the bromine atom-containing benzyl acrylate or benzyl methacrylate.

The brominated poly(meth)acrylate is preferably a bromine atom-containing (meth)acrylate monomer, and in particular a polymer obtained by polymerizing a benzyl (meth)acrylate alone, copolymerizing two or more types of benzyl (meth)acrylate, or copolymerizing a benzyl (meth)acrylate with another vinyl monomer. The bromine atom is preferably attached to the benzene ring, and the number of bromine atoms attached is from 1 to 5, preferably 4 to 5, per benzene ring.

As the brominated poly(meth)acrylate, a pentabromobenzyl poly(meth)acrylate is preferred because it has a high bromine content.

The molecular weight of the brominated poly(meth)acrylate is arbitrary, and may be selected and determined as appropriate, but in terms of weight average molecular weight (Mw), is preferably 3,000 or more, more preferably 10,000 or more, further preferably 15,000 or more, still further preferably 20,000 or more, and still further preferably 25,000 or more. By setting the weight average molecular weight (Mw) to be equal to or more than the above lower limit, a molded article having higher mechanical strength tends to be obtained. The upper limit of the weight average molecular weight (Mw) is preferably 100,000 or less, more preferably 80,000 or less, further preferably 60,000 or less, still further preferably 50,000 or less, and still further preferably 35,000 or less. By setting the weight average molecular weight (Mw) to be equal to or less than the above upper limit, the fluidity of the resin composition tends to be further improved.

The free bromine content of the brominated polycarbonate is preferably 0.05% by mass or more, and preferably 0.20% by mass or less. By setting to such a range, the heat resistance stability of the resin composition tends to be further improved. The chlorine atom content of the brominated polycarbonate is preferably 0.001% by mass or more, and preferably 0.20% by mass or less. By setting to such a range, mold corrosion resistance during molding tends to be further improved.

Specifically, the brominated polycarbonate is preferably a brominated polycarbonate obtained from, for example, a brominated bisphenol A, and in particular from tetrabromobisphenol A. Examples of the terminal structure include a phenyl group, a 4-t-butylphenyl group, a 2,4,6-tribromophenyl group, and the like. In particular, a brominated polycarbonate having a 2,4,6-tribromophenyl group for the terminal structure is preferred.

The average number of carbonate structural units in the brominated polycarbonate may be selected and determined as appropriate, but is preferably from 2 to 30, more preferably from 3 to 15, and further preferably from 3 to 10.

The molecular weight of the brominated polycarbonate is arbitrary and may be selected and determined as appropriate, but in terms of viscosity average molecular weight, is preferably from 1,000 to 20,000, and more preferably from 2,000 to 10,000.

The above-described brominated polycarbonate obtained from a brominated bisphenol A can be obtained, for example, by a conventional method of reacting the brominated bisphenol and phosgene. Examples of a terminal capping agent include an aromatic monohydroxy compound, which may be substituted with a halogen or organic group.

Specifically, preferred examples of the brominated epoxy include a tetrabromobisphenol A epoxy compound and a bisphenol A type brominated epoxy compound represented by a glycidyl brominated bisphenol A epoxy compound.

The molecular weight of the brominated epoxy compound is arbitrary and may be selected and determined as appropriate, but in terms of weight average molecular weight (Mw), is preferably 3,000 or more, more preferably 10,000 or more, further preferably 13,000 or more, still further preferably 15,000 or more, and still further preferably 18,000 or more. By setting the weight average molecular weight (Mw) to be equal to or more than the above lower limit, a molded article having higher mechanical strength tends to be obtained. The upper limit of the weight average molecular weight (Mw) is preferably 100,000 or less, more preferably 80,000 or less, further preferably 78,000 or less, still further preferably 75,000 or less, and still further preferably 70,000 or less. By setting the weight average molecular weight (Mw) to be equal to or less than the above upper limit, the fluidity of the resin composition tends to be further improved.

The epoxy equivalent of the brominated epoxy compound is preferably from 3,000 to 40,000 g/eq, and of that, preferably from 4,000 to 35,000 g/eq, and particularly preferably from 10,000 to 30,000 g/eq.

Further, a brominated epoxy oligomer can also be used together as the brominated epoxy. In such a case, flame retardance, mold release properties, and fluidity can be adjusted as appropriate by using, for example, an oligomer having a Mw of 5,000 or less in a proportion of about 50% by mass or less. The bromine atom content in the brominated epoxy compound is arbitrary, but in order to provide sufficient flame retardance, the bromine atom content is usually 10% by mass or more, and of that, preferably 20% by mass or more, and in particular 30% by mass or more, with an upper limit of

preferably 60% by mass, and of that, in particular 55% by mass or less.

Examples of the brominated polystyrene include a brominated polystyrene preferably containing a structural unit represented by formula (3),

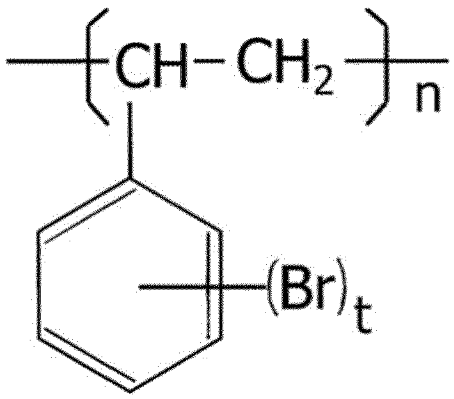

(3)

wherein t is an integer from 1 to 5, and n is the number of constituent units.

The brominated polystyrene may be produced either by brominating polystyrene or by polymerizing a brominated styrene monomer, but a brominated polystyrene produced by polymerizing a brominated styrene is preferred because the amount of free bromine (atoms) contained is small. Further, in formula (3), the CH group to which brominated benzene is bonded may be substituted with a methyl group. In addition, the brominated polystyrene may be a copolymer obtained by copolymerizing with another vinyl monomer. Examples of the vinyl monomer in this case include styrene, α-methylstyrene, (meth)acrylonitrile, methyl (meth)acrylate, butadiene, vinyl acetate, and the like. Moreover, the brominated polystyrene may be a single substance or a mixture of two or more types having different structures may be used, and the brominated polystyrene may contain units derived from styrene monomers having different numbers of bromines in a single molecular chain.

Specific examples of the brominated polystyrene include poly(4-bromostyrene), poly(2-bromostyrene), poly(3-bromostyrene), poly(2,4-dibromostyrene), poly(2,6 -dibromostyrene), poly(2,5-dibromostyrene), poly(3,5-dibromostyrene), poly(2,4,6-tribromostyrene), poly(2,4,5-tribromostyrene), poly(2,3,5-tribromostyrene), poly(4-bromo-α-methylstyrene), poly(2,4-dibromo-α-methylstyrene), poly(2,5-dibromo-α-methylstyrene), poly(2,4,6-tribromo-α-methylstyrene), poly(2,4,5-tribromo-α-methylstyrene), and the like, and it is particularly preferred to use poly(2,4,6-tribromostyrene), poly(2,4,5-tribromostyrene), and a polydibromostyrene or polytribromostyrene containing an average of 2 to 3 bromine groups in the benzene ring.

The brominated polystyrene preferably has a number n (average degree of polymerization) of structural units in formula (3) of from 30 to 1,500, more preferably from 150 to 1,000, and particularly preferably from 300 to 800. If the average degree of polymerization is less than 30, blooming tends to occur, while if the average degree of polymerization exceeds 1,500, poor dispersion tends to occur and mechanical properties tend to deteriorate. The weight average molecular weight (Mw) of the brominated polystyrene is preferably from 5,000 to 500,000, more preferably from 10,000 to 500,000, further preferably from 10,000 to 300,000, still further preferably from 10,000 to 100,000, and still further preferably from 10,000 to 70,000. In particular, in the case of the above-described brominated product of polystyrene, the weight average molecular weight (Mw) is preferably from 50,000 to 70,000, and in the case of brominated polystyrene produced by polymerization, the weight average molecular weight (Mw) is preferably about 10,000 to 30,000. The weight average molecular weight (Mw) can be determined as a value in terms of standard polystyrene by GPC measurement.

The bromine concentration in the bromine-based flame retardant is preferably 45% by mass or more, more preferably 48% by mass or more, and further preferably 50% by mass or more. By setting the bromine concentration to be equal to or more than the above lower limit, the flame retardance of the molded article tends to be effectively improved. The upper limit of the bromine concentration is preferably 75% by mass or less, more preferably 73% by mass or less, and further preferably 71% by mass or less.

When using a phosphinate metal salt as the flame retardant, the type of the phosphinate metal salt is not particularly limited, but it is preferred that the phosphinate metal salt has an anion moiety that is represented by formula (4) or (5), and the metal ion of the cation moiety is any of calcium, magnesium, aluminum, or zinc.

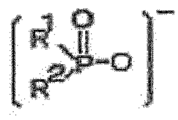

(4)

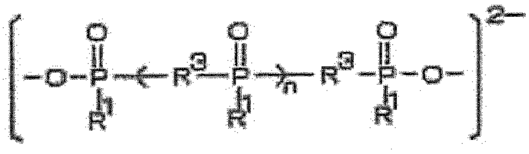

(5)

In formulas (4) and (5), $R^1$ and $R^2$ each independently represent an alkyl group having from 1 to 6 carbon atoms or an optionally substituted aryl group, each $R^1$ may be the same or different, $R^3$ represents an alkylene group having from 1 to 10 carbon atoms, an optionally substituted arylene group, or a group composed of a combination thereof, each $R^3$ may be the same or different, and n represents an integer of from 0 to 2.

The optionally substituted aryl group is preferably an optionally substituted phenyl group. When the aryl group has a substituent, the substituent is preferably an alkyl group having from 1 to 3 carbon atoms. Further, the aryl group may also preferably be unsubstituted.

The optionally substituted arylene group is preferably an optionally substituted phenylene group. It is preferred that the optionally substituted arylene group is either unsubstituted or has an alkyl group having from 1 to 3 carbon atoms (preferably a methyl group) as a substituent.

In the second embodiment, a phosphinate metal salt represented by formula (5) is preferred. Moreover, in the second embodiment, aluminum phosphinate is preferred.

Specific examples of the phosphinate metal salt include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methane di(methylphosphinate), magnesium methane di(methylphosphinate), aluminum methane bis(methylphosphinate), zinc methane bis(methylphosphinate), calcium benzene-1,4-bis(methylphosphinate), magnesium benzene-1,4-bis(methylphosphinate), aluminum benzene-1,4-bis(methylphosphinate), zinc benzene-1,4-bis(methylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

Details regarding the phosphinate metal salt may be found in the descriptions in paragraphs 0052 to 0058 of International Publication No. WO 2010/010669.

The lower limit of the content of the flame retardant (preferably bromine-based flame retardant) in the resin composition of the second embodiment is, with respect to a total of 100 parts by mass of the polybutylene terephthalate resin and the polyethylene terephthalate resin, preferably 1 part by mass or more, more preferably 3 parts by mass or more, further preferably 5 parts by mass or more, still further preferably 7 parts by mass or more, and still further preferably 10 parts by mass or more. By setting the content to be equal to or more than the above lower limit the flame retardance of the molded article obtained tends to be further improved. The upper limit of the content of the flame retardant is, with respect to a total of 100 parts by mass of the polybutylene terephthalate resin and the polyethylene terephthalate resin, preferably 50 parts by mass or less, more preferably 40 parts by mass or less, further preferably 30 parts by mass or less, still further preferably 25 parts by mass or less, still further preferably 20 parts by mass or less, still further preferably 18 parts by mass or less, more preferably 16 parts by mass or less. and further preferably 15 parts by mass or less. By setting the amount to be equal to or less than the above upper limit, a decrease in the mechanical strength of the molded article obtained can be more effectively suppressed.

The resin composition of the second embodiment may contain only one type of the flame retardant, or may contain two or more types of the flame retardant. When two or more types are included, the total amount is preferably within the ranges described above.

<Flame retardant aid>

The resin composition of the second embodiment may include a flame retardant aid. By including the flame retardant aid, the flame retardance of the molded article can be further improved. It is particularly preferred to use the flame retardant aid when a halogen-based flame retardant is included. Examples of the flame retardant aid used in the second embodiment include an antimony compound, such as antimony trioxide ($Sb_2O_3$), antimony pentoxide ($Sb_2O_5$), sodium antimonate, and the like. In particular, from the viewpoint of impact resistance, antimony oxide, particularly antimony trioxide, is preferred.

In the case of adding the flame retardant aid, the flame retardant aid may be added as a masterbatch. The content of the antimony compound in the masterbatch is preferably from 30 to 90% by mass, more preferably from 40 to 85% by mass, and further preferably from 50 to 85% by mass. The resin used for the masterbatch is preferably a polyester resin,

and more preferably a polybutylene terephthalate resin.

When the resin composition of the second embodiment includes a flame retardant aid (for example, an antimony compound), the content thereof is, with respect to a total of 100 parts by mass of the polybutylene terephthalate resin and the polyethylene terephthalate resin, 0.1 parts by mass or more, more preferably 1.0 parts by mass or more, further preferably 2.0 parts by mass or more, and still further preferably 3.0 parts by mass or more. By setting the content to be equal to or more than the above lower limit, flame retardance tends to be more effectively exhibited. The upper limit of the content of the antimony compound is, with respect to a total of 100 parts by mass of the polybutylene terephthalate resin and the polyethylene terephthalate resin, preferably 20.0 parts by mass or less, more preferably 15.0 parts by mass or less, further preferably 10.0 parts by mass or less, still further preferably 8.0 parts by mass or less, still further preferably 7.0 parts by mass or less, and may be 6.0 parts by mass or less. By setting the content to be equal to or less than the above upper limit, the mold release properties and impact resistance of the molded article obtained tend to improve.

The resin composition of the second embodiment may contain only one type of the flame retardant aid, or may contain two or more types of the flame retardant aid. When the resin composition contains two or more types, the total amount is preferably within the ranges described above.

<Anti-dripping agent>

It is also possible for the resin composition of the second embodiment to contain an anti-dripping agent. The anti-dripping agent is preferably a polytetrafluoroethylene (PTFE), and a polytetrafluoroethylene that is capable of forming fibrils, is easily dispersed in the resin composition, and tends to bind resins together to form a fibrous material is preferred.

The proportion of the anti-dripping agent contained is, with respect to a total of 100 parts by mass of the polybutylene terephthalate resin and the polyethylene terephthalate resin, preferably from 0.1 to 20 parts by mass. By setting the proportion to be equal to or more than 0.1 parts by mass or more, flame retardance is exhibited more effectively, and by setting the proportion to be 20 parts by mass or less, the appearance of the molded article obtained tends to be improved. More preferably, the proportion of the anti-dripping agent contained is from 0.5 to 10 parts by mass with respect to a total of 100 parts by mass of the polybutylene terephthalate resin and the polyethylene terephthalate resin.

The resin composition of the second embodiment may contain only one type of the anti-dripping agent, or may contain two or more types of the anti-dripping agent. When the resin composition contains two or more types, the total amount is preferably within the ranges described above.

<Inorganic filler>

The resin composition of the second embodiment further contains an inorganic filler in the resin composition. By including the inorganic filler, the mechanical strength of the molded article obtained is improved.

The inorganic filler may be a fibrous inorganic filler or a non-fibrous inorganic filler, but is preferably a fibrous inorganic filler.

The content (total amount) of the inorganic filler in the resin composition of the second embodiment is, with respect to a total of 100 parts by mass of the polybutylene terephthalate resin and the polyethylene terephthalate resin, preferably 1 part by mass or more, more preferably 10 parts by mass or more, further preferably 20 parts by mass or more, still further preferably 30 parts by mass or more, still further preferably 40 parts by mass or more, still further preferably 50 parts by mass or more, and particularly further preferably 55 parts by mass or more. By setting the amount to be equal to or more than the above lower limit, rigidity tends to be further improved. The upper limit of the content (total amount) of the inorganic filler is, with respect to a total of 100 parts by mass of the polybutylene terephthalate resin and the polyethylene terephthalate resin, preferably 150 parts by mass or less, more preferably 100 parts by mass or less, further preferably 80 parts by mass or less, and still further preferably 70 parts by mass or less. By setting the content to be equal to or less than the above upper limit, the surface appearance of the molded article tends to be improved.

The content (total amount) of the inorganic filler in the resin composition of the second embodiment is preferably 20% by mass or more, and more preferably 25% by mass or more, of the resin composition. By setting the content to be equal to or more than the above lower limit, the impact resistance and strength of the resin composition tend to be further improved. Further, the content of the inorganic filler (preferably fibrous inorganic filler) in the resin composition of the second embodiment is, of the resin composition, preferably 60% by mass or less, more preferably 55% by mass or less, further preferably 50% by mass or less, still further preferably 45% by mass or less, and still further preferably 40% by mass or less. By setting the content to be equal to or less than the above upper limit, anisotropy in the elongation and shrinkage rate of the resin composition tends to be further improved, and moldability tends to be further improved.

The resin composition of the second embodiment may contain only one type of the inorganic filler, or may contain two or more types of the inorganic filler. When the resin composition contains two or more types, the total amount is preferably within the ranges described above.

<<Non-fibrous inorganic filler>>

Non-fibrous inorganic filler refers to an inorganic filler in a shape other than fibrous, and is preferably a plate-like inorganic filler or a particulate inorganic filler, more preferably a particulate inorganic filler.
The details of the non-fibrous filler used in the resin composition of the second embodiment are, unless stated otherwise, the same as described in <Non-fibrous inorganic filler> in the first embodiment, and that description may be referred to.
The content of the non-fibrous inorganic filler in the resin composition of the second embodiment is, with respect to a total of 100 parts by mass of the polybutylene terephthalate resin and the polyethylene terephthalate resin, 1.0 parts by mass or more, preferably 1.5 parts by mass or more, more preferably 2.0 parts by mass or more, further preferably 2.5 parts by mass or more, still further preferably 3.0 parts by mass or more, still further 3.5 parts by mass or more, and still further preferably 4.0 parts by mass or more. By setting the content to be equal to or more than the above lower limit, there tends to be further improvement in the effects of improving rigidity and heat resistance, reducing shrinkage during molding, and reducing anisotropy. Further, the upper limit of the content of the non-fibrous inorganic filler is, with respect to a total of 100 parts by mass of the polybutylene terephthalate resin and the polyethylene terephthalate resin, 100 parts by mass or less, preferably 90 parts by mass or less, more preferably 80 parts by mass or less, further preferably 50 parts by mass or less, still further preferably 30 parts by mass or less, still further preferably 15 parts by mass or less, still further preferably 10 parts by mass or less, particularly further preferably 8 parts by mass or less, and may be 5 parts by mass or less. By setting the content to be equal to or less than the above upper limit, the surface appearance of the molded article tends to be improved.
When the resin composition of the second embodiment includes a non-fibrous inorganic filler, the content thereof is, of the resin composition, preferably 0.5% by mass or more, more preferably 1.0% by mass or more, and further preferably 1.5% by mass or more. By setting the content to be equal to or more than the above lower limit, there tends to be further improvement in the effects of improving rigidity and heat resistance, reducing shrinkage during molding, and reducing anisotropy. Further, the content of the non-fibrous inorganic filler is, of the resin composition, preferably 15% by mass or less, more preferably 10% by mass or less, further preferably 7% by mass or less, still further preferably 5% by mass or less, and may be 3% by mass or less. By setting the content to be equal to or less than the above upper limit, the surface appearance of the molded article tends to be improved.
The resin composition of the second embodiment may contain only one type of the non-fibrous inorganic filler, or may contain two or more types of the non-fibrous inorganic filler. When two or more types are included, the total amount is preferably within the ranges described above.

<<Fibrous inorganic filler>>

The fibrous inorganic filler may be short fibers or long fibers.
Examples of the raw material of the fibrous inorganic filler include inorganic materials such as glass, carbon (carbon fiber, etc.), alumina, boron, ceramic, metal (steel, etc.), as well as organic substances such as plants (including Kenaf, bamboo, etc.), aramid, polyoxymethylene, aromatic polyamide, polyparaphenylene benzobisoxazole, and ultra-high molecular weight polyethylene, and glass is preferred.
The resin composition of the second embodiment preferably contains glass fiber as the fibrous inorganic filler.
The glass fiber is selected from glass compositions such as A-glass, C-glass, E-glass, R-glass, D-glass, M-glass, and S-glass, and E-glass (alkali-free glass) is particularly preferred.
Glass fiber refers to a fibrous material that has a perfect circular or polygonal cross-sectional shape when cut at right angles to the length direction. The glass fiber has a single fiber number average fiber diameter of usually from 1 to 25 μm, and preferably 5 to 17 μm, By setting the number average fiber diameter to be equal to or more than 1 μm, the moldability of the resin composition tends to be further improved. By setting the number average fiber diameter to be equal to or less than 25 μm, the appearance of the obtained structure tends to improve and a reinforcement effect also tends to improve. The glass fiber may be a single fiber or a plurality of twisted single fibers.
The form of the glass fiber may be any of glass roving, which is made by continuously winding a single fiber or a plurality of twisted-together strands, chopped strands cut to a length of from 1 to 10 mm (i.e., glass fiber having a number average fiber length of from 1 to 10 mm), and milled fiber that has been crushed to a length of about 10 to 500 μm (i.e., glass fiber having a number average fiber length of from 10 to 500 μm), but chopped strands having a length of from 1 to 10 mm are preferred. Glass fibers having different shapes can also be used together.
A glass fiber having an irregular cross-sectional shape is also preferred. This irregular cross-sectional shape means that the oblateness, which is represented by the major axis/minor axis ratio of a cross section perpendicular to the length direction of the fiber, is, for example, from 1.5 to 10, and of that, preferably from 2.5 to 10, further preferably from 2.5 to 8, and particularly from 2.5 to 5.
To improve affinity with the resin component, the glass fiber may be surface-treated with, for example, a silane

compound, an epoxy compound, a urethane compound, and the like, or have been oxidized, as long as the properties of the resin composition of the second embodiment are not significantly impaired.

The content of the fibrous inorganic filler in the resin composition of the second embodiment is, with respect to a total of 100 parts by mass of the polybutylene terephthalate resin and the polyethylene terephthalate resin, 1 part by mass or more, preferably 10 parts by mass or more, more preferably 20 parts by mass or more, further preferably 30 parts by mass or more, still further preferably 40 parts by mass or more, still further 50 parts by mass or more, and still further preferably 55 parts by mass or more. By setting the content to be equal to or more than the above lower limit, there tends to be further improvement in the effects of improving rigidity and heat resistance, reducing shrinkage during molding, and reducing anisotropy. Further, the upper limit of the content of the non-fibrous inorganic filler is, with respect to a total of 100 parts by mass of the polybutylene terephthalate resin and the polyethylene terephthalate resin, preferably 150 parts by mass or less, more preferably 100 parts by mass or less, further preferably 80 parts by mass or less, and still further preferably 70 parts by mass or less. By setting the content to be equal to or less than the above upper limit, the surface appearance of the molded article tends to be improved.

<Other components>

The resin composition of the second embodiment may optionally include other components in addition to those described above, as long as the various desired physical properties are not significantly impaired. The details of the other components are the same as described in <Other components> for the resin composition of the first embodiment, and that description may be referred to.

<Method for producing resin composition>

The method for producing the second resin composition is the same as described in <Method for producing resin composition> in the first embodiment, and that description may be referred to.

<Method for producing molded article>

The resin composition of the second embodiment is molded according to a known method.

The method for producing a molded article formed from the second resin composition is the same as described in <Method for producing molded article> in the first embodiment, and that description may be referred to.

<Composite>

The molded article obtained by molding the resin composition of the second embodiment can be bonded to the same material or another member via an adhesive to form a composite. That is, the composite of the second embodiment has an adhesive layer between a molded article formed from the resin composition of the second embodiment and another member. Therefore, the resin composition and molded article of the second embodiment can be used for adhesion to other members.

Examples of the other member include a member containing at least one of a resin (thermoplastic resin, thermosetting resin), metal, and glass.

Here, adhesive refers to a substance that bonds two things together, and is usually a non-thermoplastic substance. Examples of the adhesive include a silicone adhesive (unmodified silicone adhesive, modified silicone adhesive), an epoxy adhesive, an acrylic adhesive, a urethane adhesive, a polyester adhesive, and the like, a silicone adhesive (unmodified silicone adhesive, modified silicone adhesive), an epoxy adhesive, and a urethane adhesive are preferred, and a silicone adhesive is more preferred. Only one type of adhesive may be used, or two or more types may be used in combination. The thickness of the adhesive layer is preferably 0.01 μm or more, more preferably 0.1 μm or more, and preferably 1,0000 μm or less, more preferably 5,000 μm or less.

<Uses>

The resin composition of the second embodiment is used as a molded article formed from the resin composition. The use of the resin composition or molded article is not particularly limited, but may be preferably used for a vehicle component or an electric/electronic component.

Examples of the vehicle component include a lamp housing, a reflector, a bezel, an extension, a connector, an ECU case, a housing for an in-vehicle camera or millimeter wave radar, a battery case, a sensor housing, and the like.

Examples of the electric/electronic component include a personal computer, a game console, a display device such as a television, a printer, a copy machine, a scanner, a fax machine, an electronic notebook or PDA, an electronic

desk calculator, an electronic dictionary, a camera, a video camera, a mobile phone, a battery pack, a drive or reading device of a recording medium, a mouse, a number pad, a housing of a CD player, a MD player, or a portable radio/audio player, a cover, a keyboard, a button, a switch member, a power meter housing, a battery case, a battery transport tray, a relay, a sensor, an actuator, a terminal switch, a grill cooking equipment component, and the like.

3. Third embodiment

The third embodiment is an application example of the resin composition of the first embodiment and/or the resin composition of the second embodiment (preferably the resin composition of the first embodiment).

The third embodiment specifically relates to a metal-resin composite, which is preferably a metal-resin composite that includes a metal member having irregularities on a surface and a thermoplastic resin member that is in contact with the metal member on a side having the irregularities, wherein the thermoplastic resin member is formed from a resin composition, and in the resin composition, a mass ratio of a polybutylene terephthalate resin and a polyethylene terephthalate resin with respect to a total of 100 parts by mass of the polybutylene terephthalate resin and the polyethylene terephthalate resin is from 10/90 to 90/10, and the polyethylene terephthalate resin contains from 1.0 to 100 $\mu$g/g of elemental iron.

With such a configuration, it is possible for the bonding strength between the metal member and the thermoplastic resin member to be excellent, and the metal-resin composite, in particular the thermoplastic resin member portion, to have excellent mold release properties. That is, a metal-resin composite that includes a metal member and a thermoplastic resin member needs to have bonding properties between the metal member and the thermoplastic resin member. In addition, in recent years, when such a metal-resin composite is insert-molded or the like, there has been an increasing trend for the thermoplastic resin member to need to have mold release properties, and the present invention is intended to meet this demand.

In the third embodiment, by using a polyethylene terephthalate resin containing a trace amount of elemental iron, it is inferred that the elemental iron acts as a nucleating agent, increasing the crystallization rate in differential scanning calorimetry (DSC measurement) of the resin composition, and improving the mold release properties. Further, it is inferred that the bonding strength between the metal member and the thermoplastic resin member is improved as a result of the improvement in the crystallization rate. That is, when molding a thermoplastic resin member by insert molding or the like, if the thermoplastic resin member is not easily released from the mold, the bonding strength between the metal member and the thermoplastic resin member will decrease. In the third embodiment, since the thermoplastic resin member has good mold release properties from the mold, it is inferred that the bonding strength with the metal member can be increased.

<Metal member>

The metal-resin composite of the third embodiment includes a metal member having irregularities on a surface. It is inferred that because the metal member irregularities on a surface, the thermoplastic resin penetrates deep into the walls of the concave portions of the irregular structure, solidifies where it is, cannot be removed from the concave portions, and is fixed therein, whereby a strong bonding strength develops.

Needless to say, the thermoplastic resin member does not need to be in contact with the metal member on all of the side having the irregularities, and may be in contact with a part of the side having the irregularities. Further, the metal member does not need to have irregularities over the whole area where the thermoplastic resin member is in contact with the metal member. That is, it is sufficient that the metal member has irregularities on a part of the area where the thermoplastic resin member and the metal member are in contact with each other.

In the third embodiment, the thermoplastic resin member is in contact with the metal member on a side having irregularities, but it is preferred that the thermoplastic resin member is in contact with the metal member on the surface of the side having the irregularities. In addition, as will be described in detail later, the present invention also includes, in a case where microparticles and the like are fixed by forming irregularities on the surface of the metal member, or a case where a primer layer is provided on the surface of the metal member, a mode in which the thermoplastic resin member is provided on the surface after such processing, and a mode in which the metal member is in contact with the side having the irregularities.

Examples of the metal constituting the metal member include various metals such as aluminum, iron, copper, magnesium, tin, nickel, and zinc, and alloys containing these metals. Among these, the metal member preferably contains at least one of aluminum, iron, copper, magnesium, and an alloy containing these metals, and more preferably contains aluminum and an alloy containing aluminum.

In addition to being made entirely of metal, the metal member may be a member in which the side having the irregularities is formed from a non-metal, and the surface of that side is plated with a metal, for example, nickel, chromium, zinc, gold, or the like.

The shape of the metal member is not particularly limited, but preferred examples of the shape include a flat plate,

a curved plate, a plate, a rod, a cylinder, a block, a sheet, a film, and the like, or a metal member produced into a specific desired shape. The shape of the surface of the raw metal member before performing irregularity-forming processing is not particularly limited. The shape is not limited to a single flat surface or a curved surface, and may have various shapes such as stepped portions, recessed portions, and convex portions.

The thickness of the metal member is not particularly limited, but is preferably in the range of from 0.05 to 100 mm, more preferably from 0.1 to 50 mm, and further preferably from 0.12 to 10 mm. In particular, in the case of an aluminum plate or an iron plate, the thickness of is preferably from 0.1 to 20 mm, and more preferably from 0.2 to 10 **mm.** Here, this thickness is, when the metal member is flat, that thickness. When the metal member is not flat, this thickness is preferably within the above range at the thinnest thickness of the metal portion in contact with the thermoplastic resin member on the side having the irregularities.

The metal member has irregularities at least in a part of the area where it is in contact with the thermoplastic resin member. The irregularities can be formed by subjecting the metal member to irregularity-forming processing (also referred to as surface roughening processing). As a result of the irregularity-forming processing, the metal member can have a surface with fine irregular shapes thereon.

The irregularity-forming processing for forming fine irregularities on the surface of the metal member is not particularly limited, and various known methods can be adopted, but examples include a chemical treatment, laser processing, a blasting treatment, and the like, and a chemical treatment is preferred.

The irregularity-forming processing may also involve physically forming convex portions by fixing, on the surface of the metal member, fine particles of a metal oxide, ceramic, or the like, such as titanium oxide or silicon oxide fine particles, dispersed in a powder or dispersed in various solvents. The number average particle size of the fine particles is preferably from 10 nm to 1 mm, more preferably from 20 nm to 500 μm, and further preferably from 30 nm to 200 μm.

The chemical treatment can be carried out by various methods depending on the type of metal, and a known method can be used. If the metal member is aluminum or an aluminum alloy, preferred examples include etching with an acidic aqueous solution and/or basic aqueous solution, or a method of, after forming an oxide film on the surface, removing the oxide film, and then performing a treatment using ammonia, hydrazine, a water-soluble amine compound, a triazine thiol, and the like.

Laser processing is a process in which the surface of the metal member is irradiated with a laser beam to form irregularities on the surface of the metal member. For example, the irregularities are formed by subjecting the metal surface to laser etching, in which grooves are formed and then the surface is melted and resolidified. For example, the irregularities are formed by performing laser scanning in a certain scanning direction and then performing laser scanning in the same scanning direction or in crossing directions a plurality of times.

The laser scanning conditions include power, scan speed, scan frequency, number of scans, hatching width (processing pitch), patterning shape, and the like etc., and by combining these, a finely textured surface can be formed from the desired concave and convex portions.

The type of laser used for the processing can be appropriately selected from solid lasers, fiber lasers, semiconductor lasers, gas lasers, and liquid lasers having various wavelengths, and the oscillation form, for example, continuous waves or pulsed waves, can be selected to match the desired shape of the irregularities on the surface of the metal member. When continuous waves are used, it is possible to create a more complex irregular structure.

Examples of the blasting treatment include shot blasting, which uses the centrifugal force of an impeller to project a blasting material, and air blasting, which uses compressed air to project the blasting material by using an air compressor. Either method can be used to impart the irregular shapes on the surface. Examples of the blasting material include silica sand, alumina, cut aluminum wire, steel grid, and steel shot.

In addition, a wet blasting treatment can also be carried out, which is an etching treatment in which water mixed with abrasive grains such as resin particles or metal particles is sprayed at high pressure toward the surface of the metal member together with processing air at a speed of several tens of meters/second to about 300 meters/second.

Another method is to plate the member with a metal (e.g., zinc plating), and evaporate a part or most of the metal (zinc) in the plating layer by heating it to a temperature higher than the melting point of the plating metal (zinc), thereby enabling a metal member having a roughened surface to be obtained.

The examples of the irregularity-forming processing (surface roughening processing) described above are used alone or in combination. Depending on the combination method, effects such as optimization of the irregularity structure and cost reduction may be found.

The irregularities on the surface of the metal member are, in terms of a ten-point average roughness Rz, preferably 300 μm or less, more preferably 250 μm or less, further preferably 150 μm or less, still further preferably 100 μm or less, still further preferably 80 μm or less, and may be 10 μm or less or 1 μm or less, and further may be 500 nm or less, 300 nm or less, 200 nm or less, or 150 nm or less. Although the lower limit is not particularly limited, in order to express bonding strength, the lower limit is preferably 0.1 nm or more. The ten-point average roughness is measured by observing the irregular surface of the metal member with a 10× objective lens of a laser microscope (KEYENCE VK-X100) and measuring the surface roughness.

It is also useful to surface-treat the metal member with a silane coupling agent. Examples of the silane coupling agent include, but are not limited to, a compound having a methoxy group, an ethoxy group, a silanol group, or the like. Preferred examples of the silane coupling agent include vinyltrimethoxysilane, chloropropyltrimethoxysilane, 3-glycidoxypropyltrimethoxysilane, 3-methacryloxypropyltrimethoxysilane, 3-aminopropyltriethoxysilane, N-2-aminoethyl-3-aminopropyltrimethoxysilane, 3-mercaptopropyltrimethoxysilane, 3-(N-styrylmethyl-2-aminoethylamino)propyltrimethoxysilane hydrochloride, ureidoaminopropylethoxysilane, and the like. In particular, an aluminum substrate or an iron substrate and the silane coupling agent strongly bond to each other by forming an Al-O-Si or Fe-O-Si bond, and the resin composition and the organic functional group of the silane coupling agent react to form a strong bond, whereby even stronger bonding can be achieved.

Further, by forming a coating of a triazine thiol derivative on the metal surface on which irregularities have been formed by a wet method using a solution containing a triazine thiol derivative, an even greater improvement in bonding strength due to chemical bonding can be achieved.

When bonding the metal member and the thermoplastic resin member, in addition to an anchoring effect due to the irregularities, it is also preferred to effectively use polar groups to form a chemical bond. For example, in order to add a COOH group, an $NH_2$ groups, and the like as acidic and basic functional groups, it is also useful to subject the metal surface on which irregularities have been formed to an ozone treatment, a plasma treatment, a flame treatment, a corona discharge treatment, a chemical treatment, and the like.

Further, it is also preferred to provide a primer layer on the metal member. Examples of preferred materials used for the primer layer include an acrylic material, an epoxy material, a urethane material, a polyamide material, and the like. An example of a commercially available material used for the primer layer is Aronmelt PPET, manufactured by Toagosei Co., Ltd.

<Thermoplastic resin member>

The metal-resin composite of the third embodiment includes a metal member and a thermoplastic resin member that is in contact with a side of the metal member having irregularities.

The thermoplastic resin member is formed from a resin composition in which a mass ratio of a polybutylene terephthalate resin and a polyethylene terephthalate resin with respect to a total of 100 parts by mass of the polybutylene terephthalate resin and the polyethylene terephthalate resin is from 10/90 to 90/10, and the polyethylene terephthalate resin contains from 1.0 to 100 μg/g of elemental iron.

In addition, in the resin composition of the third embodiment, the proportion of the polybutylene terephthalate resin is, with respect to a total of 100 parts by mass of the polybutylene terephthalate resin and the polyethylene terephthalate resin, preferably 12 parts by mass or more, more preferably more than 15 parts by mass, further preferably 20 parts by mass or more, still further preferably 23 parts by mass or more, still further preferably 25 parts by mass or more, still further preferably 27 parts by mass or more, and still further preferably 28 parts by mass or more. Further, in the resin composition of the third embodiment, the proportion of the polybutylene terephthalate resin is, with respect to a total of 100 parts by mass of the polybutylene terephthalate resin and the polyethylene terephthalate resin, preferably 85 parts by mass or less, more preferably 50 parts by mass or less, and may be 40 parts by mass or less or 35 parts by mass or less.

The total amount of the polybutylene terephthalate resin and the polyethylene terephthalate resin in the resin composition of the third embodiment is preferably 40% by mass or more, more preferably 45% by mass or more, further preferably 55% by mass or more, still further preferably 60% by mass or more, and still further 65% by mass or more. Setting the total amount to be equal to or more than the above lower limit is preferred because molding processability (mold release properties) is excellent, and the thermoplastic resin member or metal-resin composite obtained by molding the resin composition has better impact resistance and mechanical properties. In addition, the mold release properties of the thermoplastic resin member or metal-resin composite are better, so that the surface appearance tends to be further improved. Further, the total amount of the polybutylene terephthalate resin and the polyethylene terephthalate resin in the resin composition of the third embodiment is preferably 99% by mass or less, more preferably 95% by mass or less, and depending on the use, may be 90% by mass or less, 85% by mass or less, or 80% by mass or less. By setting the total amount to be equal to or less than the above upper limit, heat resistance tends to be improved.

The resin composition of the third embodiment may contain only one type, or two or more types, of the polybutylene terephthalate resin and the polyethylene terephthalate resin, respectively. When two or more types are included, the total amount is preferably within the ranges described above.

<<Polybutylene terephthalate resin>>

The resin composition of the third embodiment preferably contains a polybutylene terephthalate resin. By using the polybutylene terephthalate resin, the resin composition can be solidified after being sufficiently filled into the irregular portions of the metal member, and so the bonding strength between the metal member and the thermoplastic resin

member tends to be further improved.

The details of the polybutylene terephthalate resin used in the resin composition of the third embodiment are, unless stated otherwise, the same as described in <Polybutylene terephthalate resin> in the first embodiment, and that description may be referred to.

<Polyethylene terephthalate resin>

The resin composition of the third embodiment includes a polyethylene terephthalate resin. The polyethylene terephthalate resin used in the third embodiment is a resin having a dicarboxylic acid and a diol as main constituent units.

In the third embodiment, the amount of the elemental iron contained in the polyethylene terephthalate resin is from 1.0 to 100 μg/g. By setting the amount to be equal to or more than the above lower limit, crystallization rate tends to be improved and mold release properties tend to be excellent. By setting the amount to be equal to or less than the above upper limit, mold release properties and hydrolysis resistance tend to be further improved.

In the third embodiment, the intrinsic viscosity of the polyethylene terephthalate resin is preferably 0.50 dL/g or more, more preferably 0.53 dL/g or more, further preferably more than 0.55 dL/g, still further preferably 0.60 dL/g or more, and still further preferably more than 0.61 dL/g. By setting the intrinsic viscosity to be equal to or more than the above lower limit, the impact resistance of the obtained thermoplastic resin member or metal-resin composite is further improved and the shrinkage rate tends to be smaller. The reason for this is inferred to be due to the fact that as the molecular weight increases, molecular entanglement tends to increase. Further, the intrinsic viscosity of the polyethylene terephthalate resin is preferably 2.0 dL/g or less, more preferably 1.5 dL/g or less, further preferably 1.2 dL/g or less, still further preferably 0.80 dL/g or less, still further preferably 0.70 dL or less, and further preferably 0.65 dL/g or less. By setting the intrinsic viscosity to be equal to or less than the above upper limit, the load on the extruder and molding machine tends to be reduced without the melt viscosity during melt-kneading and molding becoming too high, and furthermore, the irregular portions of the metal member make it easier to fill the resin composition, which tends to further improve the bonding strength between the metal member and the thermoplastic resin member.

When the resin composition of this embodiment contains two or more types of polyethylene terephthalate resins, the intrinsic viscosity is the intrinsic viscosity of the mixture.

The melt volume rate (MVR) of the polyethylene terephthalate resin measured in accordance with JIS K7210 (temperature 265°C, load 5 kgf) is preferably 10 $cm^3$/10 minutes or more, more preferably 50 $cm^3$/10 minutes or more, and further preferably 80 $cm^3$/10 minutes or more, and is preferably 150 $cm^3$/10 minutes or less, more preferably 120 $cm^3$/10 minutes or less, and further preferably 100 $cm^3$/10 minutes or less.

Polyethylene terephthalate resins, especially recycled PET such as recycled PET derived from PET bottles, may contain metal elements as impurities. Impurities may also come from the reaction vessel and, in the case of recycled PET, the cutter. It was thought that it is better to not include metal elements, especially elemental iron, since such substances are magnetic, but it has been discovered that by purposely including a small amount of elemental iron in the resin composition of the third embodiment, mold release properties and hydrolysis resistance can be improved.

It is inferred that the elemental iron acts as a crystal nucleating agent in the resin composition of the third embodiment, and that the elemental iron in particular contributes to improving the mold release properties of the thermoplastic resin member or metal-resin composite obtained by molding the resin composition. It goes without saying that the third embodiment is not limited to using recycled PET, and virgin PET containing a predetermined amount of elemental iron may also be preferably used.

The details of the polyethylene terephthalate resin used in the resin composition of the third embodiment are, unless stated otherwise, the same as described in <Polyethylene terephthalate resin> in the first embodiment, and that description may be referred to.

<Inorganic filler>

The resin composition of the third embodiment may include an inorganic filler. By including the inorganic filler, it is possible to improve the mechanical strength of the obtained thermoplastic resin member and also of the metal-resin composite.

The shape of the inorganic filler is not particularly limited, and examples thereof include a fibrous filler and/or a non-fibrous inorganic filler.

One example of the resin composition of the third embodiment is a resin composition containing a fibrous filler.

The total amount of the inorganic filler in the resin composition of the third embodiment is, with respect to a total of 100 parts by mass of the polybutylene terephthalate resin and the polyethylene terephthalate resin, preferably 1 part by mass or more, more preferably 5 parts by mass or more, further preferably 8 parts by mass or more, still further preferably 15 parts by mass or more, still further preferably 25 parts by mass or more, still further preferably 30 parts by mass or more, and particularly further preferably 35 parts by mass or more. By setting the total amount to be equal to or more than the

above lower limit, the mechanical strength of the obtained thermoplastic resin member or metal-resin composite tends to be further improved. Further, the upper limit of the total amount of the inorganic filler is, with respect to a total of 100 parts by mass of the polybutylene terephthalate resin and the polyethylene terephthalate resin, preferably 150 parts by mass or less, more preferably 120 parts by mass or less, further preferably 100 parts by mass or less, still further preferably 80 parts by mass or less, still further preferably 60 parts by mass or less, and still further preferably 50 parts by mass or less. By setting the total amount to be equal to or less than the above upper limit, moldability tends to be even better.

The total amount of the inorganic filler in the resin composition of the third embodiment is, of the resin composition, preferably 1% by mass or more, more preferably 5% by mass or more, further preferably 15% by mass or more, still further preferably 20% by mass or more, still further preferably 25% by mass or more, still further preferably 30% by mass or more, and still further preferably 35% by mass or more. By setting the total amount to be equal to or more than the above lower limit, the mechanical strength of the obtained thermoplastic resin member or metal-resin composite tends to be further improved, and the shrinkage rate of the thermoplastic resin member or metal-resin composite tends to be smaller. Further, the total amount of the inorganic filler in the resin composition of the third embodiment is, of the resin composition, preferably 60% by mass or less, more preferably 55% by mass or less, and further preferably 50% by mass or less. By setting the total amount to be equal to or less than the above upper limit, moldability tends to be even better.

The resin composition of the third embodiment may contain only one type of the inorganic filler, or may contain two or more types of the inorganic filler. When the resin composition contains two or more types, the total amount is preferably within the ranges described above.

<<Content of elemental iron in resin composition>>

In the resin composition of the third embodiment, when the resin composition contains an inorganic filler, the content of the elemental iron is, among the components other than the inorganic filler in the resin composition, preferably from 0.1 to 90 μg/g. By setting the content in this range, the effects of this invention tend to be exhibited more effectively.

The details of the content of elemental iron in the resin composition of the third embodiment are the same as described in <Content of elemental iron in resin composition> described in the first embodiment, and that description may be referred to.

<<Fibrous inorganic filler>>

The resin composition of the third embodiment may include a fibrous inorganic filler. By including the fibrous inorganic filler, the mechanical strength of the obtained thermoplastic resin member or metal-resin composite is improved, and the molding shrinkage rate can also be effectively reduced.

The details of the fibrous inorganic filler are, unless stated otherwise, the same as described in <<Fibrous inorganic filler>> in the second embodiment, and that description may be referred to.

The content of the fibrous inorganic filler in the resin composition of the third embodiment is, with respect to a total of 100 parts by mass of the polybutylene terephthalate resin and the polyethylene terephthalate resin, preferably 1 part by mass or more, more preferably 5 parts by mass or more, further preferably 8 parts by mass or more, still further preferably 15 parts by mass or more, still further preferably 25 parts by mass or more, still further preferably 30 parts by mass or more, and particularly further preferably 35 parts by mass or more. By setting the content to be equal to or more than the above lower limit, the mechanical strength of the obtained thermoplastic resin member or metal-resin composite tends to be further improved. Further, the upper limit of the content of the fibrous inorganic filler is, with respect to a total of 100 parts by mass of the polybutylene terephthalate resin and the polyethylene terephthalate resin, preferably 150 parts by mass or less, more preferably 120 parts by mass or less, further preferably 100 parts by mass or less, still further preferably 80 parts by mass or less, still further preferably 60 parts by mass or less, and still further preferably 50 parts by mass or less. By setting the content to be equal to or less than the above upper limit, moldability tends to be even better.

The content of the fibrous inorganic filler in the resin composition of the third embodiment is, of the resin composition, preferably 1% by mass or more, more preferably 5% by mass or more, further preferably 15% by mass or more, still further preferably 20% by mass or more, still further preferably 25% by mass or more, still further preferably 30% by mass or more, and still further preferably 35% by mass or more. By setting the content to be equal to or more than the above lower limit, the mechanical strength of the obtained thermoplastic resin member or metal-resin composite tends to be further improved, and the shrinkage rate of the thermoplastic resin member or metal-resin composite tends to be smaller. Further, the content of the fibrous inorganic filler in the resin composition of the third embodiment is, of the resin composition, preferably 60% by mass or less, more preferably 55% by mass or less, and further preferably 50% by mass or less. By setting the content to be equal to or less than the above upper limit, moldability tends to be even better.

The resin composition of the third embodiment may contain only one type of the fibrous inorganic filler, or may contain two or more types of the fibrous inorganic filler. When the resin composition contains two or more types, the total amount is preferably within the ranges described above.

<<Non-fibrous inorganic filler>>

The resin composition of the third embodiment may include a non-fibrous inorganic filler. By including the non-fibrous inorganic filler, the mechanical strength of the obtained thermoplastic resin member or metal-resin composite is improved, and the molding shrinkage rate also tends to be effectively reduced.
The details of the non-fibrous inorganic filler are, unless stated otherwise, the same as described in <Non-fibrous inorganic filler> in the first embodiment, and that description may be referred to.
The content of the non-fibrous inorganic filler in the resin composition of the third embodiment is, with respect to a total of 100 parts by mass of the polybutylene terephthalate resin and the polyethylene terephthalate resin, preferably 1.0 parts by mass or more, more preferably 1.5 parts by mass or more, further preferably 2.0 parts by mass or more, further preferably 2.5 parts by mass or more, still further preferably 3.0 parts by mass or more, still further 3.5 parts by mass or more, and particularly further preferably 4.0 parts by mass or more. By setting the content to be equal to or more than the above lower limit, there tends to be further improvement in the effects of improving rigidity and heat resistance, reducing shrinkage during molding, and reducing anisotropy. Further, the upper limit of the content of the non-fibrous inorganic filler is, with respect to a total of 100 parts by mass of the polybutylene terephthalate resin and the polyethylene terephthalate resin, preferably 100 parts by mass or less, more preferably 90 parts by mass or less, further preferably 80 parts by mass or less, still further preferably 50 parts by mass or less, still further preferably 30 parts by mass or less, still further preferably 15 parts by mass or less, still further preferably 10 parts by mass or less, and particularly further preferably 8.0 parts by mass or less. By setting the content to be equal to or less than the above upper limit, the surface appearance of the thermoplastic resin member or metal-resin composite molded article tends to be improved.
When the resin composition of the third embodiment includes a non-fibrous inorganic filler, the content thereof is, of the resin composition, preferably 0.5% by mass or more, more preferably 1.0% by mass or more, further preferably 1.5% by mass or more, still further preferably 2.0% by mass or more, still further preferably 2.5% by mass or more, and particularly preferably 3.0% by mass or more. By setting the content to be equal to or more than the above lower limit, there tends to be further improvement in the effects of improving rigidity and heat resistance, reducing shrinkage during molding, and reducing anisotropy. Further, the content of the non-fibrous inorganic filler is, of the resin composition, preferably 15% by mass or less, more preferably 10% by mass or less, and particularly preferably 7.0% by mass or less. By setting the content to be equal to or less than the above upper limit, the surface appearance of the thermoplastic resin member or metal-resin composite molded article tends to be improved.
The resin composition of the third embodiment may contain only one type of the non-fibrous inorganic filler, or may contain two or more types of the non-fibrous inorganic filler. When two or more types are included, the total amount is preferably within the ranges described above.

<Other components>

The resin composition of the third embodiment may optionally include other components in addition to those described above, as long as the various desired physical properties are not significantly impaired. The details of the other components are, unless stated otherwise, the same as described in <Other components> in the first embodiment, and that description may be referred to.

<<Colorant>>

The resin composition of the third embodiment may include a colorant (dye and/or pigment). The colorant may be a dye or a pigment.
When the colorant contains a dye, box-shape mold release properties tend to improve, and the bonding strength between the metal member and thermoplastic resin member also tends to improve.
The colorant may be either an organic colorant or an inorganic colorant. Further, the colorant may be either a chromatic colorant or an achromatic colorant.
Examples of the colorant include the descriptions in paragraphs 0121 to 0123 of Japanese Patent Laid-Open No. 2021-101020 A and the descriptions in paragraphs 0088 to 0090 of Japanese Patent Laid-Open No. 2019-188393 A.
The resin composition of the third embodiment preferably contains carbon black. There are no restrictions on the type, raw material, or production method of the carbon black, and any of furnace black, channel black, acetylene black, Ketjen black, and the like can be used. Among these, furnace black is preferred. There is no particular restriction on the number average particle size, but about 5 to 60 nm is preferred.
The details of the carbon black used in the third embodiment are, unless stated otherwise, the same as described regarding the carbon black in the first embodiment, and that description may be referred to.
When the resin composition of the third embodiment includes a dye, the dye can be appropriately selected depending on the use of the resin composition, and the color of the dye is not particularly limited. The dye used in the third

embodiment is preferably a black coloring matter and/or a black coloring matter composition. Black coloring matter composition means a coloring matter composition that exhibits black color by combining two or more types of chromatic coloring matter such as red, blue, and green.

A first embodiment of the black coloring matter composition is a mode containing a green coloring matter and a red coloring matter. A second embodiment of the black coloring matter composition is a mode containing a red coloring matter, a blue coloring matter, and a yellow coloring matter.

Specific examples of light-transmitting coloring matter include nigrosine, naphthalocyanine, aniline black, phthalocyanine, porphyrin, perinone, perylene, quaterrylene, azo, azomethine, anthraquinone, pyrazolone, squaric acid derivatives, perylene, chromium complexes, immonium, imidazole (in particular, benzimidazole), cyanine, and the like, and azomethine, anthraquinone, and perinone are preferred. Among those, anthraquinone, perinone, perylene, imidazole (in particular, benzimidazole), and cyanine are more preferred.

Examples of commercially available products include e-BIND LTW-8731H and e-BIND LTW-8701H, which are coloring matters manufactured by Orient Chemical Industries Co., Ltd., Plast Yellow 8000, Plast Red M 8315, Plast Red 8370, and Oil Green 5602, which are coloring matters manufactured by Arimoto Chemical Co., Ltd., Macrolex Yellow 3G, Macrolex Red EG, and Macrolex Green 5B, which are coloring matters manufactured by LANXESS, KP Plast HK, KP Plast Red HG, KP Plast Red H2G, KP Plast Blue R, KP Plast Blue GR, and KP Plast Green G, manufactured by Kiwa Chemical Industry Co., Ltd., the Lumogen series manufactured by BASF, and the like. Further, the coloring matters described in Japanese Patent Laid-Open No. 4157300 B and the coloring matters described in Japanese Patent Laid-Open No. 4040460 B can also be used.

When the resin composition of the third embodiment includes a colorant (preferably carbon black), the content thereof is, with respect to a total of 100 parts by mass of the polybutylene terephthalate resin and the polyethylene terephthalate resin, preferably 0.01 parts by mass or more, more preferably 0.05 parts by mass or more, and further preferably 0.1 parts by mass or more, and still further preferably 0.5 part by mass or less. By setting the content to be equal to or more than the above lower limit, the colorant effect tends to be more effectively expressed, and mold release properties tend to improve. Further, the upper limit of the content of the colorant is, with respect to a total of 100 parts by mass of the polybutylene terephthalate resin and the polyethylene terephthalate resin, preferably 4 parts by mass or less, more preferably 3 parts by mass or less, further preferably 2 parts by mass or less, and still further preferably 1 part by mass or less. By setting the content to be equal to or less than the above upper limit, the mechanical strength of the obtained thermoplastic resin member or metal-resin composite tends to be improved.

The resin composition of the third embodiment may contain only one type of the colorant, or may contain two or more types of the colorant. When the resin composition contains two or more types, the total amount is preferably within the ranges described above.

<<Method for producing resin composition>>

The resin composition of the third embodiment can be produced by a conventional method for preparing resin compositions. Usually, each component and the various additives to be optionally added are thoroughly mixed together, and then melt-kneaded using a single-screw or twin-screw extruder. Alternatively, the resin composition of the third embodiment can be prepared without mixing each component in advance, by pre-mixing only a part of the components, and feeding the mixture into an extruder using a feeder, and melt-kneading. Also, a masterbatch may be prepared by melt-kneading a part of the components such as the colorant with a thermoplastic resin, and then adding the remaining components and melt-kneading the mixture.

In addition, when using an inorganic filler, it is preferred to feed the inorganic filler from a side feeder at a point along the cylinder of the extruder.

The heating temperature during melt-kneading can be normally selected as appropriate from the range of 220 to 300°C. If the temperature is too high, decomposition gas tends to be generated, which may cause opacity. Therefore, it is desirable to select a screw configuration that takes shear heat generation into consideration. In order to suppress decomposition during the kneading and subsequent molding, it is desirable to use an antioxidant and a heat stabilizer.

<<Method for producing metal-resin composite>>

In the method for producing the metal-resin composite of the third embodiment, it is preferred to apply and mold a molten resin composition to the side of a metal member that has irregularities on a surface.

When applying the resin composition to the metal member, the molding machine to be used is not particularly limited as long as the machine can form a metal-resin composite of the metal member and the resin composition. Examples that can be used include various types of molding machine, such as an injection molding machine, an extrusion molding machine, a heating molding machine, a compression molding machine, a transfer molding machine, a cast molding machine, and a reaction injection molding machine. Among these, an injection molding machine is particularly preferred.

That is, preferably, the step of applying a molten resin composition to the metal member having irregularities on a surface is performed by injection molding.

In the case of injection molding, specifically, production is preferably performed by insert molding, in which the metal member is inserted into the cavity of an injection mold and the resin composition is injected into the mold. Specifically, a mold for molding is prepared, the mold is opened, the metal member is placed (inserted) in a part of the mold, the mold is then closed, the resin composition is injected into the mold so that at least a part of the resin composition is in contact with a surface of the metal member on which irregular shapes have been formed, and the resin composition is solidified. Then, the metal-resin composite can be obtained by opening and releasing the mold.

The size of the inserted metal member may be determined as appropriate depending on the size, structure, and the like of the intended metal-resin composite. The inserted metal member does not need to be formed over the entire metal-resin composite obtained, and may be a part of the metal-resin composite.

To improve bonding strength, it is preferred to make the temperature of the molten resin composition and the temperature of the metal member as close as possible during the insert molding. The method is not particularly limited, but it is desirable to heat the metal member in advance. The heating method is not particularly limited, and examples thereof include heating the metal member by induction heating, infrared heating, a hot plate, a heating furnace, a laser, or the like before performing insert molding, externally heating the vicinity of a bonding region of the metal member with the resin composition with a halogen lamp, a dryer, or the like after the metal member is inserted into the mold, heating with a cartridge heater or the like arranged inside the mold, and the like. In particular, it is useful to locally heat only the bonded region with the resin composition. Here, "locally heat" includes, depending on the heating means, heating until periphery including the bonding area but not heating the portion of the metal member farther from the bonding area.

The higher the heating temperature, the better, but the heating temperature is usually from 100 to 350°C, preferably from 120 to 250°C, and more preferably from 130 to 250°C. By setting the heating temperature to be equal to or more than the above lower limit, the difference from the mold temperature can be increased and the heating effect can be more effectively exhibited, and by setting the heating temperature to be equal to or less than the above upper limit, the heating time can be shortened, and thus the molding cycle tends to be improved, and resin retention is less likely to occur, which is preferred from a molding viewpoint.

As the method for obtaining the metal-resin composite, in addition to the methods described above, a method can be selected which forms the composite by heating the metal member, the thermoplastic resin member (resin composition), or both, by laser welding, vibration welding, ultrasonic welding, or the like. The optimal method may be selected depending on the shape of the composite, cost, and the like. In particular, a laser welding method is preferred because it allows welding in a localized area, which can also achieve local heating.

The size, shape, thickness, and the like of the metal-resin composite of the third embodiment obtained in this way are not particularly limited, and the shape may be any of a plate shape (disk, polygon, etc.), columnar, a box shape, a bowl shape, a tray shape, and the like. Further, the thickness of all parts of the composite does not need to be uniform, and the composite may be provided with reinforcing ribs or the like.

In the third embodiment, the meaning of metal-resin composite includes not only the final product, but also various components.

The molded article formed from the metal-resin composite of the third embodiment can firmly and stably bond the metal member and the thermoplastic resin member, and can obtain excellent bonding strength and mold release properties. Therefore, the molded article can be suitably used for various purposes. Among these, the molded article is preferably used for automobile applications and general home appliances that in particular require bonding strength.

Specifically, the molded article can be preferably used in applications requiring bonding strength as a function, such as a member constituting a part or all of a casing of electric/electronic components (housings, cases, covers, etc.) that are built into general home appliances, as well as OA equipment such as smartphones and computers, mechanical components, and vehicle electrical components (various types of control units, ignition coil components, sensor components, motor components, power modules, capacitors, insulators, motor terminal blocks, batteries, electric compressors, battery current sensors, junction blocks, etc.).

[Examples]

The present invention will now be explained in more detail with reference to the following examples.

If the measuring equipment and the like used in the examples is difficult to obtain due to discontinuation, for example, the measurements can be performed using other equipment with an equivalent performance.

1. The following raw materials were used.

[Table 1]

| Raw Material | Details |
| --- | --- |
| PBT-1 | Polybutylene terephthalate resin<br>Trade name: "NOVADURAN 5008", manufactured by Mitsubishi Engineering-Plastics Corporation<br>Intrinsic viscosity: 0.85 dL/g |
| PBT-2 | Polybutylene terephthalate resin<br>Processed product of frozen crushed powder of "NOVADURAN 5008, intrinsic viscosity: 0.85 dL/g", manufactured by Mitsubishi Engineering-Plastics Corporation<br>Average particle size D40: 853 μm, bulk density: 0.559g/$cm^3$ |
| PBT-3 | Polybutylene terephthalate resin<br>Trade name: "NOVADURAN 5020", manufactured by Mitsubishi Engineering-Plastics Corporation<br>Intrinsic viscosity: 1.20 dL/g |
| PBT-4 | Polybutylene terephthalate resin<br>Trade name: "NOVADURAN 5007", manufactured by Mitsubishi Engineering-Plastics Corporation<br>Intrinsic viscosity: 0.70 dL/g |
| Virgin PET-1 | Polyethylene terephthalate resin<br>Trade name: "Novapet PBK1", manufactured by Mitsubishi Chemical Corporation<br>Intrinsic viscosity: 0.64 dL/g, isophthalic acid copolymer percentage 0 mol% |
| PCR-PET- 1 | Bottle-derived recycled polyethylene terephthalate resin<br>Trade name: "N1-100", manufactured by Indorama Ventures<br>Intrinsic viscosity: 0.83 dL/g, isophthalic acid copolymer percentage 1.7 mol% |
| PCR-PET- 2 | Bottle-derived recycled polyethylene terephthalate resin<br>Trade name: "Recycled PET Bottle 100%" "R-PET TB65", manufactured by Takayasu Co., Ltd.<br>Intrinsic viscosity: 0.64 dL/g, isophthalic acid copolymer percentage 1.4 mol% |
| PCR-PET- 3 | Film-derived recycled polyethylene terephthalate resin<br>Trade name: "Recycled PET Film 100%", manufactured by Takayasu Co., Ltd.<br>Intrinsic viscosity: 0.58 dL/g, isophthalic acid copolymer percentage 0 mol% |

[Table 2]

| Raw Material | Details |
| --- | --- |
| Styrene-based resin | Acrylonitrile-styrene copolymer (AS resin)<br>Trade name: "AP-A", manufactured by UMG-ABS,<br>Average particle size D50: 412 μm |
| Non-fibrous inorganic filler | Synthetic calcium carbonate<br>Trade name: "Brilliant-1500", manufactured by Shiraishi Calcium Kaisha, Ltd.<br>Average primary particle size 150nm, specific gravity 2.8 |
| Fibrous inorganic filler-1 | Glass fiber<br>Trade name: "T-187", manufactured by Nippon Electric Glass Co., Ltd.<br>Number average fiber diameter: 13 μm, number average fiber length: 3 mm |
| Fibrous inorganic filler-2 | Trade name: T-127, manufactured by Nippon Electric Glass Co., Ltd.<br>Number average fiber diameter: 13 μm, number average fiber length: 3 mm |
| Reactive compound-1 | Glycidyl methacrylate-styrene-methyl methacrylate copolymer<br>Trade name: "Joncryle ADR4468", manufactured by BASF<br>Mw: 7250, epoxy equivalent: 310 g/mol |
| Reactive compound-2 | Bisphenol A type epoxy resin<br>Trade name: "jER1003", manufactured by Mitsubishi Chemical Corporation<br>Epoxy equivalent: 670 to 770 (g/eq) |

(continued)

| Raw Material | Details |
|---|---|
| Mold release agent-1 | Montanic acid ester wax<br>Trade name: "Licowax E" powder, manufactured by Clariant |
| Mold release agent-2 | Oxidized polyethylene wax<br>Trade name: "Licowax PED522", manufactured by ADEKA |
| Mold release agent-3 | Fischer-Tropsch wax<br>Trade name "H1", manufactured by Sasol |
| Mold release agent-4 | Ethylene bisstearamide mold release agent<br>Trade name: "Light Amide WH255", manufactured by Kyoeisha Chemical Co., Ltd.<br>Acid value: ≤15mg KOH/g |

[Table 3]

| Raw Material | Details |
|---|---|
| Flame retardant | Brominated epoxy resin<br>Trade name: "CXB2000H", manufactured by Woo Jin Copolymer Co., Mw = 19000 Br content = 52% |
| Flame retardant aid | PBT-based masterbatch containing 80% antimony trioxide<br>Trade name: "405001", manufactured by SICA<br>Antimony trioxide/PBT = 80/20 (mass ratio) |
| Anti-dripping agent | Polytetrafluoroethylene<br>Trade name: "TF1750", manufactured by 3M |
| Nucleating agent | Talc<br>Trade name: "Micron White #5000S", manufactured by Hayashi Kasei Co., Ltd.<br>Average particle size: 4.75( μm) |
| Stabilizer-1 | Hindered phenol stabilizer<br>Trade name: "AO-330", manufactured by ADEKA, melting point 244□C 1,3,5-tris(3,5-di-tert-butyl-4-hydroxyphenylmethyl)-2,4,6-trimethylbenzene |
| Stabilizer-2 | Hindered phenol stabilizer<br>Trade name: "ADK Stab AO-60", manufactured by ADEKA, melting point 120 °C |
| Stabilizer-3 | Phosphorous-based stabilizer<br>Trade name: "ADK AX-71", manufactured by ADEKA, melting point 68 to 75 °C |

[Table 4]

| Raw Material | Details |
|---|---|
| CB-MB- 1 | Carbon black masterbatch<br>Mixture of styrene-acrylonitrile copolymer resin (51% by mass), carbon black (48% by mass), and calcium stearate (1% by mass)<br>Trade name: "EX-3531", manufactured by Nippon Pigment Company, Ltd.<br>Carbon black: DBP oil absorption amount of 68 to 82 $cm^3$/100g |
| CB-MB- 2 | Carbon black masterbatch<br>Polybutylene terephthalate resin (70% by mass), carbon black (30% by mass)<br>Trade name: "i-star MBC0010", manufactured by Ichikin Co., Ltd.<br>Carbon black: number average particle size 24 nm, coloring power: 127%, DBP oil absorption amount of 95 $cm^3$/100g |

(continued)

| Raw Material | Details |
|---|---|
| CB-MB- 3 | Carbon black masterbatch<br>Carbon black/PBT = 19/81 (mass ratio)<br>Carbon black:<br>Trade name: "#650B", number average particle size: 22 nm, coloring Power: 125%, DBP oil absorption amount: 114 $cm^3$/100g, manufactured by Mitsubishi Chemical Corporation<br>Polybutylene terephthalate:<br>Trade name: "NOVADURAN 5008", manufactured by Mitsubishi Engineering- |
| Dye-1 | Perinone dye (C.I. Solvent Red 179)<br>Trade name: Plast Red 8370, manufactured by Arimoto Chemical Co., Ltd. |
| Dye-2 | Anthraquinone dye (C.I. Solvent Blue 97)<br>Trade name: KP Plast Blue R, manufactured by Kiwa Chemical Industry Co., Ltd. |
| Dye-3 | Anthraquinone dye (C.I. Solvent yellow 163)<br>Trade name: KP Plast Yellow HK, manufactured by Kiwa Chemical Industry Co., |

Regarding these components, the amount of elemental iron in the thermoplastic resin components other than the polyethylene terephthalate resin was below the detection limit.

The details of the PET were as follows.

[Table 5]

| | | Virgin PET-1 | PCR-PET-1 | PCR-PET-2 | PCR-PET-3 |
|---|---|---|---|---|---|
| Intrinsic viscosity | (dL/g) | 0.64 | 0.83 | 0.64 | 0.58 |
| Isophthalic acid copolymer percentage | (mol%) | 0.0 | 1.7 | 1.4 | 0 |
| DSC(1st run) | Tc1(°C) | 139 | no peak | 132 | 138 |
| | $\Delta H_{Tc1}$(J/g) | -21.4 | no peak | -19.4 | -21.3 |
| | Tm(°C) | 254 | 240 | 250 | 254 |
| | $\Delta H_{Tm}$(J/g) | 43.5 | 52.3 | 43.2 | 43.7 |
| | Tc2(°C) | no peak | 175 | 184 | 185 |
| | $\Delta H_{Tc2}$(J/g) | no peak | -28.1 | -38.7 | -41.5 |
| DSC(2nd run) | Tc1(°C) | 166 | no peak | - | - |
| | $\Delta H_{Tc1}$(J/g) | -22.7 | no peak | - | - |
| | Tm(°C) | 252 | 245 | - | - |
| | $\Delta H_{Tm}$(J/g) | 36.1 | 28.1 | - | - |
| | Tc2(°C) | no peak | 162 | - | - |
| | $\Delta H_{Tc2}$(J/g) | no peak | -24.5 | - | - |
| MVR(265°C×5kgf) | $cm^3$/10min | 110 | 31 | 92 | 132 |
| DEG | mol% | 2.0 | 2.2 | 2.3 | 1.8 |
| AV | eq/t | 46.7 | 39.9 | 43.0 | 44.6 |
| GPC | Mn | $0.85\times10^4$ | $1.4\times10^4$ | $0.96\times10^4$ | $0.92\times10^4$ |
| | Mw | $2.5\times10^4$ | $4.0\times10^4$ | $2.7\times10^4$ | $2.4\times10^4$ |
| | Mz | $4.4\times10^4$ | $7.3\times10^4$ | $4.7\times10^4$ | $4.2\times10^4$ |
| | Mw/Mn | 3.0 | 2.9 | 2.8 | 2.6 |

(continued)

| | | Virgin PET-1 | PCR-PET-1 | PCR-PET-2 | PCR-PET-3 |
|---|---|---|---|---|---|
| HPLC (% by mass) | cyclic trimer | 0.87 | 0.36 | 0.43 | 0.59 |
| | cyclic tetramer | 0.26 | 0.10 | 0.12 | 0.18 |
| | cyclic pentamer | 0.13 | 0.03 | 0.06 | 0.09 |
| | total of cyclic forms | 1.26 | 0.49 | 0.61 | 0.86 |
| Metal element qualitative/semiquantitative analysis (μg/g) | Na (μg/g) | n.d | 2.3 | 0.7 | 3.3 |
| | Mg (μg/g) | 65 | 1.9 | 0.8 | 53 |
| | P (μg/g) | 26 | 8.0 | 10.0 | 17.0 |
| | Ca (μg/g) | n.d | 5.5 | 1.3 | 39.0 |
| | Ti (μg/g) | n.d | 2.5 | 1.9 | 0.4 |
| | Fe (μg/g) | 0.7 | 2.6 | 1.5 | 0.4 |
| | Ge (μg/g) | n.d | n.d | 3.8 | n.d |
| | Sb (μg/g) | 200 | 220 | 150 | 66 |
| | Na + Fe + Ti | <1.1 | 7.4 | 4.1 | 4.1 |

In the above table, "n. d" indicates that the measured value was below the detection limit. Detection limit values: Fe 0.3 (μg/g), Ca 0.2 (μg/g), Na 0.2 (μg/g), Ti 0.2 (μg/g), Ge 3 (μg/g)

<Measurement of intrinsic viscosity>

Polyethylene terephthalate resin pellets were dissolved in a mixed solvent of phenol/1,1,2,2-tetrachloroethane (mass ratio 1/1) so that the concentration was 1.00 g/dL by stirring at 110°C for 1 hour. The mixture was then cooled to 30°C. Using a fully automatic solution viscometer, the number of seconds for the sample solution to fall and the number of seconds for only the solvent to fall were measured at 30°C, and the intrinsic viscosity was calculated using the following formula (1).

$$\text{Intrinsic viscosity} = ((1+4K_H\eta_{sp})^{0.5}-1)/(2K_HC) \quad (1)$$

Here, $\eta_{sp}=\eta/\eta_0-1$, wherein $\eta$ is the number of seconds for the sample solution to fall, $\eta_0$ is the number of seconds for only the solvent to fall, C is the sample solution concentration (g/dL), and $K_H$ is Huggins' constant. $K_H$ was set at 0.33.

A fully automatic solution viscometer manufactured by Shibayama Scientific Co., Ltd. was used.

<Measurement by DSC>

The crystallization temperature, heat of crystallization, melting point, and heat of fusion of the polyethylene terephthalate resin were measured using a differential scanning calorimeter (DSC) based on JIS K7121. The temperature was raised from 40°C to 300°C at a rate of temperature increase of 20 °C/min in a nitrogen atmosphere, held at 300°C for 3 minutes, and then lowered to 40°C at a rate of temperature cooling of -20 °C/min. This was taken as one cycle. The temperature of the maximum peak due to crystallization during the heating phase was defined as crystallization temperature Tc1, and the heat of crystallization was determined as $\Delta H_{Tc1}$. The melting point Tm and the heat of fusion $\Delta H_{Tm}$ were determined from the peak at the time of fusion. The temperature of the maximum peak due to crystallization during the cooling phase was defined as crystallization temperature Tc2 and heat of crystallization $\Delta H_{Tc2}$. When the absolute value of the heat of crystallization $\Delta H$ of the peak during crystallization during the heating phase and the cooling phase was less than 3 J/g, or when there was no peak, such cases were classified as "no peak" in the above table.

The heat of fusion $\Delta H_{Tm}$ was taken to be the area surrounded by the endothermic peak and the baseline, the heat of crystallization $\Delta H_{TC1}$ was taken to be the area surrounded by the exothermic peak of crystallization which was confirmed below the melting point during the heating phase and the baseline, and the heat of crystallization $\Delta H_{TC2}$ was taken to be the area surrounded by the exothermic peak during the cooling phase and the baseline.

A "DSC7020" manufactured by Hitachi High-Tech Science Corporation was used as the differential scanning

calorimeter.

<Measurement of MVR>

The MVR was determined by measuring the melt flow volume MVR (unit: $cm^3$/10 minutes) per unit time of the pellets obtained above using a melt indexer under conditions of 265°C and a load of 5 kgf.
The melt indexer used was manufactured by Takara Kougyou.

<Measurement of isophthalic acid amount and DEG amount>

The amount of isophthalic acid and the amount of DEG (diethylene glycol) in the polyethylene terephthalate resin were measured by $^1$H-NMR.
The $^1$H-NMR measurement was performed using an AVANC III (manufactured by Bruker BioSpin).

<Measurement of terminal carboxyl group content (AV)>

A sample was obtained by pulverizing the polyethylene terephthalate resin, then drying in a hot air dryer at 140°C for 15 minutes, and cooling to room temperature in a desiccator. From the sample, 0.1 g was accurately weighed and collected in a test tube, to which 3 mL of benzyl alcohol was added, and the mixture was made to dissolve at 195°C for 3 minutes while blowing dry nitrogen gas. Then, 5 mL of chloroform was gradually added, the mixture was cooled to room temperature, 1 to 2 drops of phenol red indicator were added to the solution, and titration was performed with a 0.1 N solution of sodium hydroxide in benzyl alcohol under stirring while blowing dry nitrogen gas. The titration was ended when the color changed from yellow to red. In addition, as a blank, the same operation was performed without dissolving the polyester sample, and the terminal carboxyl group content (acid value) was calculated using the following formula.

$$\text{Terminal carboxyl group content (eq/ton)} = (a-b)\times 0.1\times f/w$$

In the formula, a is the amount (μL) of the 0.1 N solution of sodium hydroxide in benzyl alcohol required for the titration, and b is the amount (μL) of the 0.1 N solution of sodium hydroxide in benzyl alcohol required for the titration without a sample, w is the amount (g) of the polyester sample, and f is the titer of 0.1 N solution of sodium hydroxide in benzyl alcohol.

<Measurement by GPC>

The molecular weight (Mw, Mn, and Mz) of the polyethylene terephthalate resin was measured as follows.
The polyethylene terephthalate resin was weighed, a predetermined amount of HFIP (hexafluoro-2-propanol) and a 10 mM-$CF_3COONa$ eluent were added, and the resin was allowed to stand overnight at room temperature to dissolve. Next, filtration was performed using a 0.45 μm PTFE cartridge filter. The molecular weight of the dissolved sample (filtrate) was measured by GPC. A cubic approximation curve using standard PMMA was used for the calibration curve, and taken as the molecular weight in terms of PMMA.
In the measurement by GPC, an HLC-8420GPC (manufactured by Tosoh) was used as a column.

2. Example 1-1, Example 1-2, Comparative Example 1-1, and Comparative Example 1-2

<Compound>

Each of the components shown in Tables 1 to 4 were uniformly mixed in the proportions (parts by mass) shown in Table 6 using a tumbler mixer, the mixture was then melt-kneaded using a twin-screw extruder ("TEX30α" manufactured by Japan Steel Works, Ltd.) at a cylinder set temperature of 260°C and a screw rotation speed of 200 rpm, and the obtained resin composition was rapidly cooled in a water tank and pelletized using a pelletizer to obtain pellets of the resin composition.

<Unnotched Charpy impact strength>

The resin composition pellets obtained above were dried at 120°C for 5 hours, and then JIS K7139 multipurpose test specimens (4 mm thick) were injection-molded using an injection molding machine (J-85AD-60H) under conditions of

a cylinder temperature of 265°C and a mold temperature of 80°C.

Using the multipurpose test specimens (4 mm thick), the unnotched Charpy impact strength (unit: $KJ/m^2$) was measured based on the JIS K7111-1 standard.

<Molding shrinkage rate>

The pellets obtained above were dried at 120°C for 5 hours, and then a molded article (length 100 mm, width 100 mm, thickness 2.0 mm) was molded using a NEX80-9E injection molding machine manufactured by Nissei Plastic Industrial Co., Ltd., at a cylinder temperature of 260°C and a mold temperature of 80°C. The obtained test specimen was conditioned for 24 hours or more under an environment of room temperature 23°C and humidity 50% RH.

Then, the dimensions in the MD (Machine Direction, also referred to as flow direction) and TD (Transverse Direction, also referred to as perpendicular direction) directions of the obtained test specimen were measured, and the molding shrinkage rate (unit: %) was calculated based on the dimensions of the mold.

<Fogging resistance>

The pellets obtained above were dried at 120°C for 5 hours, and then a molded article (length 100 mm, width 100 mm, thickness 2.0 mm) was molded using a NEX80-9E injection molding machine manufactured by Nissei Plastic Industrial Co., Ltd., at a cylinder temperature of 265°C and a mold temperature of 80°C. The obtained molded article was crushed into pellet size, 5 g was placed in a test tube (φ 20×160 mm), a lid of heat-resistant glass (Tempax glass φ 25x2 mm) was placed on the test tube, and then a heat treatment was carried out at 160°C for 24 hours. After the heat treatment was completed, deposits due to decomposed matter sublimated from the resin composition were deposited on the inside of the heat-resistant glass plate. The haze of the heat-resistant glass plate after the heat treatment was measured using a haze meter "TC-HIIIDPK" manufactured by Tokyo Denshoku Co., Ltd., and was used as a fogging resistance index.

The unit is shown as a %.

The lower the haze value, the better the fogging resistance.

<Mold deposit evaluation>

The pellets obtained above were dried at 120°C for 5 hours, and 300 shots of molded articles of 27 mm long axis × 15 mm short axis × 3 mm thickness were consecutively molded using an injection molding machine manufactured by Sumitomo Heavy Industries, Ltd. (clamping force 18 T), under conditions of a cylinder temperature 280°C, a mold temperature of 35°C, and a cooling time of 2 seconds. Then, the state of deposit adhesion on the mold surface was visually observed. Cases of "no adhesion" were evaluated with an A, and cases of "adhesion present" were evaluated with a B.

<Box-shape mold release properties>

The pellets obtained above were dried at 120°C for 5 hours, and box-shape molded articles having a thickness of 1.5 mmt and external dimensions of 30×50×15 mm were molded using an injection molding machine manufactured by Sumitomo Heavy Industries, Ltd. (clamping force 50 T), under conditions of a cylinder temperature 265°C, a mold temperature of 40°C, and cooling time of 30 or 20 seconds. The maximum mold release resistance value (unit: MPa) when the ejector pin was pressed to release the mold was evaluated as the mold release resistance. The unit is indicated as MPa. The measurement was carried out using an internal pressure measurement system "Mold Marshalling System (registered trademark)", which uses an ejector pin-shaped pressure sensor "EP Sensor (registered trademark)" manufactured by Futaba Corporation with a built-in pressure sensing element. If the maximum mold release resistance value is 15 MPa or less, it can be determined that there is no problem when it is used as an actual product.

<Hydrolysis resistance>

JIS K7139 multipurpose test specimens (4 mm thick) molded as described above were treated for 25 hours using a pressure cooker testing machine at a temperature of 121°C, a relative humidity of 100%, and a pressure of 2 atm, and the tensile strength (after treatment for 25 hours) was measured (unit: MPa). In addition, the tensile strength retention rate was calculated (unit: %).

The pressure cooker testing machine used was an EH8-221M, manufactured by ESPEC.

Tensile strength retention rate (%) = Tensile strength after 25 hours of PCT treatment/Initial tensile strength×100

A: 60%≤tensile strength retention rate
B: 50%≤tensile strength retention rate<60%
C: tensile strength retention rate <50%

[Table 6]

| | | Example 1-1 | Example 1-2 | Comparative Example 1-1 | Comparative Example 1-2 |
|---|---|---|---|---|---|
| Component | PBT-1 | 61.8 | 61.8 | 61.8 | 61.8 |
| | PBT-2 | 5.6 | 5.6 | 5.6 | 5.6 |
| | PBT-3 | 11.8 | 11.8 | 11.8 | 11.8 |
| | Virgin PET-1 | 0.0 | 0.0 | 0.0 | 20.8 |
| | PCR-PET-1 | 20.8 | 0.0 | 0.0 | 0.0 |
| | PCR-PET-2 | 0.0 | 20.8 | 0.0 | 0.0 |
| | PCR-PET-3 | 0.0 | 0.0 | 20.8 | 0.0 |
| | Styrene-based resin | 4.8 | 4.8 | 4.8 | 4.8 |
| | Non-fibrous filler | 4.4 | 4.4 | 4.4 | 4.4 |
| | Reactive compound-1 | 0.1 | 0.1 | 0.1 | 0.1 |
| | Mold release agent-1 | 0.1 | 0.1 | 0.1 | 0.1 |
| | Mold release agent-2 | 0.3 | 0.3 | 0.3 | 0.3 |
| | Stabilizer-1 | 0.1 | 0.1 | 0.1 | 0.1 |
| | CB-MB-1 | 0.6 | 0.6 | 0.6 | 0.6 |
| | CB-MB-2 | 2.3 | 2.3 | 2.3 | 2.3 |
| Unnotched Charpy impact strength ($kJ/m^2$) | | 101 | 39 | 36 | 65 |
| Molding shrinkage rate (%) | MD | 1.47 | 1.46 | 1.48 | 1.59 |
| | TD | 1.44 | 1.44 | 1.49 | 1.60 |
| Fogging resistance (Haze %) | | 0.6 | 1.1 | 1.5 | 2.2 |
| Mold deposits | | A | A | A | B |
| Box-shape mold release resistance (MPa) | Cooling time 30 s | 3.4 | 4.5 | 4.5 | Face cracking |
| | Cooling time 20 s | - | - | - | Face cracking |
| Hydrolysis resistance | | A | B | C | B |

As is clear from the tables above, the resin compositions of Examples 1-1 and 1-2 had excellent mold release properties and hydrolysis resistance. Further, the resin compositions of Examples 1-1 and 1-2 had excellent impact resistance. In addition, the resin compositions of Examples 1-1 and 1-2 had low molding shrinkage rates. Moreover, the resin compositions of Examples 1-1 and 1-2 had excellent fogging resistance. Further, the resin compositions of Examples 1-1 and 1-2 were excellent in terms of mold deposits.

3. Examples 2-1 to 2-4 and Comparative Examples 2-1 to 2-3

<Compound>

Each of the components, except for the glass fiber, shown in Tables 1 to 4 were uniformly mixed in the proportions (parts by mass) shown in Table 7 or 8 using a tumbler mixer, the mixture was then charged into the hopper of a twin-screw

extruder ("TEX30α" manufactured by Japan Steel Works, Ltd.), the glass fiber was fed from a side feeder, and melt-kneading was carried out at a cylinder set temperature of 260°C and a screw rotation speed of 200 rpm to obtain a resin composition. The resin composition was rapidly cooled in a water tank and pelletized using a pelletizer to obtain pellets of the resin composition.

<Tensile strength>

The resin pellets obtained above were dried at 120°C for 5 hours, ISO multipurpose test specimens (4 mm thick) were injection-molded using an injection molding machine (J-85AD-60H, manufactured by Japan Steel Works, Ltd.) under conditions of a cylinder temperature of 265°C and a mold temperature of 80°C.

Using the molded ISO multipurpose test specimens, tensile strength (unit: MPa) was measured in accordance with ISO527-1 and ISO527-2.

<Unnotched Charpy impact strength>

The resin composition pellets obtained above were dried at 120°C for 5 hours, and then JIS K7139 multipurpose test specimens (4 mm thick) were injection-molded using an injection molding machine ("J-85AD-60H", manufactured by Japan Steel Works, Ltd.) under conditions of a cylinder temperature of 265°C and a mold temperature of 80°C.

Using the multipurpose test specimens (4 mm thick), the unnotched Charpy impact strength (unit: $KJ/m^2$) was measured based on the JIS K7111-1 standard.

<Flame retardance>

<<Production of test specimen>>

The resin composition pellets obtained above were dried at 120°C for 5 hours, and then combustion test specimens (12.7 mm wide × 127 mm long × 1.6 mm thick) were injection-molded using an injection molding machine (J-50AD, manufactured by Japan Steel Works, Ltd.) under conditions of a cylinder temperature of 265°C and a mold temperature of 80°C.

<<Combustion test>>

Five of the test specimens for a combustion test obtained were subjected to a vertical combustion test according to Underwriters Laboratories Subject 94 (UL94) method. The burn time (t1) after the first contact with the flame and the burn time (t2) after the second flame contact were measured, and the maximum burn time and total burn time (T1+T2) were determined. The maximum burn time was the largest value of t1 or t2 of the five tested specimens. The total burn time (T1 + T2) was total (T1+T2) of the total time (T1) of the 5 combustion test specimens at the burn time (t1) after the first flame contact and the total time (T2) of the 5 combustion test specimens at the burn time (t2) after the second flame contact.

<Adhesive strength>

A 20 mm × 20 mm square adhesive-applied area was created by pasting NITOFLON pressure-sensitive adhesive tape (10 mm wide × 0.18 mm thick) manufactured by Nitto on the chuck part of the ISO multipurpose test specimens (dumbbell pieces) produced above. Then, approximately 1 g of silicone adhesive KE-1875 manufactured by Shin-Etsu Chemical Co., Ltd. was applied on this area, and the chuck part of another ISO multipurpose test specimen made of the same material was attached and fixed with a binder clip.

The test specimen was placed in a hot air oven at 120°C for 1 hour to solidify the adhesive, and then taken out and left in an atmosphere of 23°C and 50% RH for 48 hours. Then, adhesive strength was measured by conducting a tensile test using an AUTOGRAPH AGS-X 10 kN manufactured by Shimadzu Corporation at a tensile speed of 5 mm/min.

[Table 7]

| | | Example 2-1 | Example 2-2 | Comparative Example 2-1 | Comparative Example 2-2 |
|---|---|---|---|---|---|
| Component | PBT-4 | 54.1 | 54.1 | 54.1 | 54.1 |
| | Virgin PET-1 | 0.0 | 0.0 | 45.9 | 0.0 |
| | PCR-PET1 | 0.0 | 45.9 | 0.0 | 0.0 |
| | PCR-PET2 | 45.9 | 0.0 | 0.0 | 0.0 |
| | PCR-PET3 | 0.0 | 0.0 | 0.0 | 45.9 |
| | Flame retardant | 14.1 | 14.1 | 14.1 | 14.1 |
| | Flame retardant aid | 5.5 | 5.5 | 5.5 | 5.5 |
| | Anti-dripping agent | 1.0 | 1.0 | 1.0 | 1.0 |
| | Nucleating agent | 3.8 | 3.8 | 3.8 | 3.8 |
| | Fibrous inorganic filler-1 | 57.1 | 57.1 | 57.1 | 57.1 |
| | Stabilizer-2 | 0.6 | 0.6 | 0.6 | 0.6 |
| | Stabilizer-3 | 0.2 | 0.2 | 0.2 | 0.2 |
| | Mold release agent-3 | 0.6 | 0.6 | 0.6 | 0.6 |
| | CB-MB-3 | 3.8 | 3.8 | 3.8 | 3.8 |
| Tensile strength (MPa) | | 131 | 135 | 127 | 123 |
| Unnotched Charpy impact strength ($kJ/m^2$) | | 37 | 47 | 40 | 34 |
| UL-94 Combustibility @ 1.6 mnt | | V-0 | V-0 | V-1 | V-0 |
| Total combustion time (T1+T2) (sec) | | 13 | 14 | 52 | 25 |
| Maximum combustion time (sec) | | 3 | 2 | 11 | 4 |
| Adhesive strength (silicone-based) (N) | | 823 | 801 | 735 | 700 |

[Table 8]

| | | Example 2-3 | Example 2-4 | Comparative Example 2-3 |
|---|---|---|---|---|
| Component | PBT-4 | 52.4 | 52.4 | 52.4 |
| | Virgin PET-1 | 0.0 | 0.0 | 47.6 |
| | PCR-PET1 | 0.0 | 47.6 | 0.0 |
| | PCR-PET2 | 47.6 | 0.0 | 0.0 |
| | PCR-PET3 | 0.0 | 0.0 | 0.0 |
| | Flame retardant | 16.8 | 16.8 | 16.8 |
| | Flame retardant aid | 6.7 | 6.7 | 6.7 |
| | Anti-dripping agent | 1.0 | 1.0 | 1.0 |
| | Nucleating agent | 3.8 | 3.8 | 3.8 |
| | Fibrous inorganic filler-1 | 57.1 | 57.1 | 57.1 |
| | Stabilizer-2 | 0.6 | 0.6 | 0.6 |
| | Stabilizer-3 | 0.2 | 0.2 | 0.2 |
| | Mold release agent-3 | 0.6 | 0.6 | 0.6 |
| | CB-MB-3 | 3.8 | 3.8 | 3.8 |
| Tensile strength (MPa) | | 130 | 136 | 127 |

(continued)

| | Example 2-3 | Example 2-4 | Comparative Example 2-3 |
|---|---|---|---|
| Unnotched Charpy impact strength ($kJ/m^2$) | 39 | 46 | 39 |
| UL-94 Combustibility @ 1.6 mmt | V-0 | V-0 | V-0 |
| Total combustion time (T1+T2) (sec) | 2 | 11 | 4 |
| Maximum combustion time (sec) | 1 | 3 | 2 |
| Adhesive strength (silicone-based) (N) | 764 | 833 | 699 |

As is clear from the above tables, the resin compositions of Examples 2-1 to 2-4 had excellent tensile strength and adhesive strength in addition to flame retardance. Further, even with a small amount of flame retardant added, a high flame retardant effect could be achieved.

4. Examples 3-1 to 3-3 and Comparative Examples 3-1 to 3-3

<Compound>

Each of the components, except for the glass fiber, shown in Tables 1 to 4 were uniformly mixed in the proportions (parts by mass) shown in Table 9 or 10 using a tumbler mixer, the mixture was then charged into the hopper of a twin-screw extruder ("TEX30$\alpha$" manufactured by Japan Steel Works, Ltd.), the glass fiber was fed from a side feeder, and melt-kneading was carried out at a cylinder set temperature of 280°C and a screw rotation speed of 200 rpm to obtain a resin composition. The resin composition was rapidly cooled in a water tank and pelletized using a pelletizer to obtain pellets of the resin composition.

<Unnotched Charpy impact strength>

The resin composition pellets obtained above were dried at 120°C for 5 hours, and then JIS K7139 multipurpose test specimens (4 mm thick) were injection-molded using an injection molding machine (J-85AD-60H) under conditions of a cylinder temperature of 290°C and a mold temperature of 140°C.

Using the multipurpose test specimens (4 mm thick), the unnotched Charpy impact strength (unit: $KJ/m^2$) was measured based on the JIS K7111-1 standard.

<Molding shrinkage rate>

The pellets obtained above were dried at 120°C for 5 hours, and then a molded article (length 100 mm, width 100 mm, thickness 2.0 mm) was molded using a NEX80-9E injection molding machine manufactured by Nissei Plastic Industrial Co., Ltd., at a cylinder temperature of 290°C and the mold temperature shown in Table 9 or 10. The obtained test specimen was conditioned for 24 hours or more under an environment of room temperature 23°C and humidity 50% RH.

Then, the dimensions in the MD (Machine Direction, also referred to as flow direction) and TD (Transverse Direction, also referred to as perpendicular direction) directions of the obtained test specimen were measured, and the molding shrinkage rate (unit: %) was calculated based on the dimensions of the mold.

<Box-shape mold release properties>

The pellets obtained above were dried at 120°C for 5 hours, and box-shape molded articles having a thickness of 1.5 mmt and external dimensions of 30×50×15 mm were molded using an injection molding machine manufactured by Japan Steel Works, Ltd. (clamping force 50 T), under conditions of the cylinder temperature and mold temperature shown in Table 9 or 10, and cooling time of 30 or 20 seconds. The maximum mold release resistance value (unit: MPa) when the ejector pin was pressed to release the mold was evaluated as the mold release resistance. If the maximum mold release resistance value is 15 MPa or less, it can be determined that there is no problem when it is used as an actual product.

<Bonding strength to different material>

<<Processing of metal member>>

Irregularities were formed on an aluminum (JIS A5052) plate having a thickness of 1.5 mm using a TRI-System

manufactured by Toadenka Co., Ltd.

<<Production of metal-resin composite>>

The above surface-treated metal member (aluminum plate) was cut to a size of 45 mm in length × 12 mm in width in accordance with ISO 19095, and mounted in the mold cavity.

A metal-resin composite in which an aluminum plate (metal member) 1 and a resin composition (thermoplastic resin member) 2 were bonded as shown in Figure 1 was formed by drying the resin pellets (resin composition) obtained above at 120°C for 4 hours on the irregularities surface side of the mounted aluminum plate, and then using those dried resin pellets, performing insert molding so that the bonding area of the resin composition with the aluminum plate was 5 mm in length × 10 mm in width (length 45 mm × width 10 mm × thickness 3 mm).

The molding was conducted using an injection molding machine ("J100AD", manufactured by Japan Steel Works, Ltd.), and injection molding was performed under conditions of a cylinder temperature of 280°C and a mold temperature of 140°C.

<<Measurement of bonding strength>>

The bonding properties of the obtained metal-resin composite were evaluated in accordance with ISO19095.

Using a tensile tester (Model 5544 manufactured by Instron), the measurement was conducted by holding both ends of the metal member (aluminum plate) 1 and the resin composition (thermoplastic resin member) 2 that were bonded together in the long axis direction with a clamp using a tensile jig prepared in accordance with ISO 19095, measuring the bonding strength (unit: MPa) by pulling at a tensioning speed of 5 mm/min and a distance between chucks of 80 mm.

[Table 9]

| | | Example 3-1 | Example 3-2 | Comparative Example 3-1 | Comparative Example 3-2 |
|---|---|---|---|---|---|
| Composition | PBT-1 | 30.0 | 30.0 | 30.0 | 30.0 |
| | PCR-PET-2 | 70.0 | 70.0 | | |
| | Virgin PET-1 | | | 70.0 | 70.0 |
| | Stabilizer-2 | 0.4 | 0.4 | 0.4 | 0.4 |
| | Carbon black (CB-MB-3) | 3.0 | | 3.0 | |
| | Carbon black (CB-MB-2) | | 1.9 | | 1.9 |
| | Dye-1 | | | | |
| | Dye-2 | | | | |
| | Dye-3 | | | | |
| | Mold release agent-4 | 0.4 | 0.4 | 0.4 | 0.4 |
| | Reactive compound-2 | 0.4 | 0.4 | 0.4 | 0.4 |
| | Fibrous inorganic filler-2 | 44.7 | 44.2 | 44.7 | 44.2 |
| Unnotched Charpy impact strength ($kJ/m^2$) | | 36 | 43 | 37 | 36 |
| Molding shrinkage rate | Initial molding shrinkage rate (MD) | 0.86 | 0.80 | 0.83 | 0.79 |
| | Initial molding shrinkage rate (TD) | 0.33 | 0.31 | 0.31 | 0.30 |
| | Molding conditions (mold temperature) (°C) | 130 | 130 | 130 | 130 |

(continued)

| | | Example 3-1 | Example 3-2 | Comparative Example 3-1 | Comparative Example 3-2 |
|---|---|---|---|---|---|
| Box-shape mold release | Mold release resistance (cooling time 30 s) (MPa) | 7.8 | 6.7 | 10.8 | 12.3 |
| | Mold release resistance (cooling time 20 s) (MPa) | 19.1 | 19.5 | 26.2 | 26.4 |
| | Molding conditions (cylinder temperature) (°C) | 280 | 280 | 280 | 280 |
| | Molding conditions (mold temperature) (°C) | 40 | 40 | 40 | 40 |
| Bonding strength to different material (MPa) | | 28 | 29 | 25 | 22 |

[Table 10]

| | | Example 3-3 | Comparative Example 3-3 |
|---|---|---|---|
| Composition | PBT-1 | 30.0 | 30.0 |
| | PCR-PET-2 | 70.0 | |
| | Virgin PET-1 | | 70.0 |
| | Stabilizer-2 | 0.4 | 0.4 |
| | Carbon black (CB-MB-3) | | |
| | Carbon black (CB-MB-2) | | |
| | Dye-1 | 0.2 | 0.2 |
| | Dye-2 | 0.2 | 0.2 |
| | Dye-3 | 0.2 | 0.2 |
| | Mold release agent-4 | 0.4 | 0.4 |
| | Reactive compound-2 | 0.4 | 0.4 |
| | Fibrous inorganic filler-2 | 43.7 | 43.7 |
| | | | |
| Unnotched Charpy impact strength ($kJ/m^2$) | | 41 | 41 |
| Molding shrinkage rate | Initial molding shrinkage rate (MD) | 0.76 | 0.75 |
| | Initial molding shrinkage rate (TD) | 0.31 | 0.30 |
| | Molding conditions (mold temperature) (°C) | 130 | 130 |
| Box-shape mold release | Mold release resistance (cooling time 30 s) (MPa) | 5.8 | 7.2 |
| | Mold release resistance (cooling time 20 s) (MPa) | 14.0 | 17.3 |
| | Molding conditions (cylinder temperature) (°C) | 280 | 280 |
| | Molding conditions (mold temperature) (°C) | 40 | 40 |
| Bonding strength to different material (MPa) | | 29 | 21 |

The metal-resin composites of Examples 3-1 to 3-3 had excellent bonding strength between the metal member and the thermoplastic resin member. Further, the mold release properties of the thermoplastic resin member from the mold were also excellent. In addition, by using a dye as a colorant, the bonding strength was superior than when using a pigment. Moreover, by using a polybutylene terephthalate resin in addition to a polyethylene terephthalate resin as the thermoplastic resin, the bonding strength was further improved.

[Reference Signs List]

1: metal member
2: thermoplastic resin member

**Claims**

1. A resin composition comprising an inorganic filler with respect to a total of 100 parts by mass of a polybutylene terephthalate resin and a polyethylene terephthalate resin, wherein
a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and the polyethylene terephthalate resin comprises from 1.0 to 100 μg/g of elemental iron.

2. The resin composition according to claim 1, comprising from 1.0 to 100 parts by mass of a non-fibrous inorganic filler, preferably a particulate inorganic filler, with respect to a total of 100 parts by mass of the polybutylene terephthalate resin and the polyethylene terephthalate resin.

3. The resin composition according to claim 2, comprising from 0.01 to 4 parts by mass of carbon black with respect to a total of 100 parts by mass of the polybutylene terephthalate resin and the polyethylene terephthalate resin.

4. The resin composition according to any one of claims 1 to 3, further comprising from 1 to 50 parts by mass of a flame retardant with respect to a total of 100 parts by mass of the polybutylene terephthalate resin and the polyethylene terephthalate resin.

5. The resin composition according to claim 4, wherein a content of the elemental magnesium contained in the polyethylene terephthalate resin is from 0.1 to 40 μg/g.

6. The resin composition according to claim 4 or 5, wherein a content of the elemental phosphorus contained in the polyethylene terephthalate resin is from 0.1 to 15 μg/g.

7. The resin composition according to any one of claims 4 to 6, wherein a content of the inorganic filler, preferably a fibrous inorganic filler, is from 1 to 150 parts by mass with respect to a total of 100 parts by mass of the polybutylene terephthalate resin and the polyethylene terephthalate resin.

8. The resin composition according to any one of claims 1 to 7, wherein a content of the elemental calcium contained in the polyethylene terephthalate resin is from 1.0 to 30 μg/g.

9. The resin composition according to any one of claims 1 to 8, wherein the polyethylene terephthalate resin comprises a total of from 1.5 to 30 μg/g of elemental iron, elemental sodium, and elemental titanium.

10. The resin composition according to any one of claims 1 to 9, wherein the polyethylene terephthalate resin comprises a unit derived from an isophthalic acid, and the unit derived from the isophthalic acid is 0.5 mol% or more and 15 mol% or less of all units derived from a dicarboxylic acid component contained in the polyethylene terephthalate resin.

11. The resin composition according to any one of claims 1 to 10, wherein the polyethylene terephthalate resin has an intrinsic viscosity of 0.60 dL/g or more.

12. The resin composition according to any one of claims 1 to 11, wherein the polyethylene terephthalate resin comprises a recycled product, preferably a recycled product containing a content of 0.8% by mass or less of a cyclic trimer contained in the polyethylene terephthalate resin.

13. A molded article formed from the resin composition of any one of claims 1 to 12.

14. A metal-resin composite comprising a metal member having irregularities on a surface and a thermoplastic resin member that is in contact with the metal member on a side having the irregularities,

wherein the thermoplastic resin member is formed from a resin composition, and
the resin composition is formed from the resin composition of any one of claims 1 to 12.

**15.** The metal-resin composite according to claim 14, wherein a proportion of the polyethylene terephthalate resin with respect to a total of 100 parts by mass of the polybutylene terephthalate resin and the polyethylene terephthalate resin is more than 50 parts by mass.

## Patentansprüche

**1.** Harzzusammensetzung, umfassend einen anorganischen Füllstoff in Bezug auf insgesamt 100 Masseteile eines Polybutylenterephthalatharzes und eines Polyethylenterephthalatharzes, wobei
ein Massenverhältnis des Polybutylenterephthalatharzes und des Polyethylenterephthalatharzes in Bezug auf insgesamt 100 Masseteile des Polybutylenterephthalatharzes und des Polyethylenterephthalatharzes 10/90 bis 90/10 beträgt und das Polyethylenterephthalatharz 1,0 bis 100 $\mu$g/g elementares Eisen umfasst.

**2.** Harzzusammensetzung gemäß Anspruch 1, umfassend 1,0 bis 100 Masseteile eines nicht-fasrigen anorganischen Füllstoffs, vorzugsweise eines partikulären anorganischen Füllstoffs, in Bezug auf insgesamt 100 Masseteile des Polybutylenterephthalatharzes und des Polyethylenterephthalatharzes.

**3.** Harzzusammensetzung gemäß Anspruch 2, umfassend 0,01 bis 4 Masseteile Ruß in Bezug auf insgesamt 100 Masseteile des Polybutylenterephthalatharzes und des Polyethylenterephthalatharzes.

**4.** Harzzusammensetzung gemäß einem der Ansprüche 1 bis 3, ferner umfassend 1 bis 50 Masseteile eines Flammschutzmittels in Bezug auf insgesamt 100 Masseteile des Polybutylenterephthalatharzes und des Polyethylenterephthalatharzes.

**5.** Harzzusammensetzung gemäß Anspruch 4, wobei ein Gehalt des elementaren Magnesiums, das in dem Polyethylenterephthalatharz enthalten ist, 0,1 bis 40 $\mu$g/g beträgt.

**6.** Harzzusammensetzung gemäß Anspruch 4 oder 5, wobei ein Gehalt des elementaren Phosphors, der in dem Polyethylenterephthalatharz enthalten ist, 0,1 bis 15 $\mu$g/g beträgt.

**7.** Harzzusammensetzung gemäß einem der Ansprüche 4 bis 6, wobei ein Gehalt des anorganischen Füllstoffs, vorzugsweise eines fasrigen anorganischen Füllstoffs, 1 bis 150 Masseteile in Bezug auf insgesamt 100 Masseteile des Polybutylenterephthalatharzes und des Polyethylenterephthalatharzes beträgt.

**8.** Harzzusammensetzung gemäß einem der Ansprüche 1 bis 7, wobei ein Gehalt des elementaren Calciums, das in dem Polyethylenterephthalatharz enthalten ist, 1,0 bis 30 $\mu$g/g beträgt.

**9.** Harzzusammensetzung gemäß einem der Ansprüche 1 bis 8, wobei das Polyethylenterephthalatharz insgesamt 1,5 bis 30 $\mu$g/g elementares Eisen, elementares Natrium und elementares Titan enthält.

**10.** Harzzusammensetzung gemäß einem der Ansprüche 1 bis 9, wobei das Polyethylenterephthalatharz eine von einer Isophthalsäure abgeleitete Einheit umfasst, und die von der Isophthalsäure abgeleitete Einheit 0,5 mol-% oder mehr und 15 mol-% oder weniger aller von einer Dicarbonsäurekomponente abgeleiteten Einheiten, die in dem Polyethylenterephthalatharz enthalten sind, beträgt.

**11.** Harzzusammensetzung gemäß einem der Ansprüche 1 bis 10, wobei das Polyethylenterephthalatharz eine Grenzviskosität von 0,60 dL/g oder mehr aufweist.

**12.** Harzzusammensetzung gemäß einem der Ansprüche 1 bis 11, wobei das Polyethylenterephthalatharz ein Recyclingprodukt, vorzugsweise ein Recyclingprodukt, das einen Gehalt von 0,8 Masse-% oder weniger eines in dem Polyethylenterephthalatharz enthaltenen cyclischen Trimers enthält, umfasst.

**13.** Formteil, das aus der Harzzusammensetzung nach einem der Ansprüche 1 bis 12 gebildet ist.

**14.** Metall-Harz-Verbundwerkstoff, umfassend ein Metallelement mit Unregelmäßigkeiten auf einer Oberfläche und ein

thermoplastisches Harzelement, das mit dem Metallelement auf einer Seite mit den Unregelmäßigkeiten in Kontakt steht,

wobei das thermoplastische Harzelement aus einer Harzzusammensetzung gebildet ist und
die Harzzusammensetzung aus der Harzzusammensetzung nach einem der Ansprüche 1 bis 12 gebildet ist.

**15.** Metall-Harz-Verbundwerkstoff gemäß Anspruch 14, wobei ein Anteil des Polyethylenterephthalatharzes in Bezug auf insgesamt 100 Masseteile des Polybutylenterephthalatharzes und des Polyethylenterephthalatharzes mehr als 50 Masseteile beträgt.

**Revendications**

**1.** Composition de résine comprenant une charge inorganique par rapport à un total de 100 parties en masse de résine de polybutylène téréphtalate et de résine de polyéthylène téréphtalate, dans laquelle
un rapport massique de la résine de polybutylène téréphtalate et de la résine de polyéthylène téréphtalate par rapport à un total de 100 parties en masse de la résine de polybutylène téréphtalate et de la résine de polyéthylène téréphtalate est compris de 10/90 à 90/10, et la résine de polyéthylène téréphtalate comprend de 1,0 à 100 µg/g de fer élémentaire.

**2.** Composition de résine selon la revendication 1, comprenant de 1,0 à 100 parties en masse d'une charge inorganique non fibreuse, de préférence une charge inorganique particulaire, par rapport à un total de 100 parties en masse de la résine de polybutylène téréphtalate et de la résine de polyéthylène téréphtalate.

**3.** Composition de résine selon la revendication 2, comprenant de 0,01 à 4 parties en masse de noir de carbone par rapport à un total de 100 parties en masse de la résine de polybutylène téréphtalate et de la résine de polyéthylène téréphtalate.

**4.** Composition de résine selon l'une quelconque des revendications 1 à 3, comprenant en outre de 1 à 50 parties en masse d'un retardateur de flamme par rapport à un total de 100 parties en masse de la résine de polybutylène téréphtalate et de la résine de polyéthylène téréphtalate.

**5.** Composition de résine selon la revendication 4, dans laquelle une teneur en magnésium élémentaire contenue dans la résine de polyéthylène téréphtalate est comprise de 0,1 à 40 µg/g.

**6.** Composition de résine selon la revendication 4 ou la revendication 5, dans laquelle une teneur en phosphore élémentaire contenue dans la résine de polyéthylène téréphtalate est comprise de 0,1 à 15 µg/g.

**7.** Composition de résine selon l'une quelconque des revendications 4 à 6, dans laquelle une teneur en charge inorganique, de préférence une charge inorganique fibreuse, est comprise de 1 à 150 parties en masse par rapport à un total de 100 parties en masse de la résine de polybutylène téréphtalate et de la résine de polyéthylène téréphtalate.

**8.** Composition de résine selon l'une quelconque des revendications 1 à 7, dans laquelle une teneur en calcium élémentaire contenue dans la résine de polyéthylène téréphtalate est comprise de 1,0 à 30 µg/g.

**9.** Composition de résine selon l'une quelconque des revendications 1 à 8, dans laquelle la résine de polyéthylène téréphtalate comprend un total de 1,5 à 30 µg/g de fer élémentaire, de sodium élémentaire et de titane élémentaire.

**10.** Composition de résine selon l'une quelconque des revendications 1 à 9, dans laquelle la résine de polyéthylène téréphtalate comprend une unité dérivée d'un acide isophtalique, et l'unité dérivée de l'acide isophtalique est supérieure ou égale à 0,5 mol % et inférieure ou égale à 15 mol % par rapport à toutes les unités dérivées d'un composant d'acide dicarboxylique contenu dans la résine de polyéthylène téréphtalate.

**11.** Composition de résine selon l'une quelconque des revendications 1 à 10, dans laquelle la résine de polyéthylène téréphtalate présente une viscosité intrinsèque supérieure ou égale à 0,60 dL/g.

**12.** Composition de résine selon l'une quelconque des revendications 1 à 11, dans laquelle la résine de polyéthylène téréphtalate comprend un produit recyclé, de préférence un produit recyclé contenant une teneur inférieure ou égale à

0,8 % en masse de trimère cyclique contenu dans la résine de polyéthylène téréphtalate.

**13.** Article moulé formé à partir de la composition de résine selon l'une quelconque des revendications 1 à 12.

**14.** Composite métal/résine comprenant un élément métallique présentant des irrégularités sur une surface et un élément en résine thermoplastique qui est en contact avec l'élément métallique sur un côté présentant les irrégularités,

dans lequel l'élément en résine thermoplastique est formé à partir d'une composition de résine, et
la composition de résine est formée à partir de la composition de résine selon l'une quelconque des revendications 1 à 12.

**15.** Composite métal/résine selon la revendication 14, dans lequel une proportion de la résine de polyéthylène téréphtalate par rapport à un total de 100 parties en masse de la résine de polybutylène téréphtalate et de la résine de polyéthylène téréphtalate est supérieure à 50 parties en masse.

FIG. 1

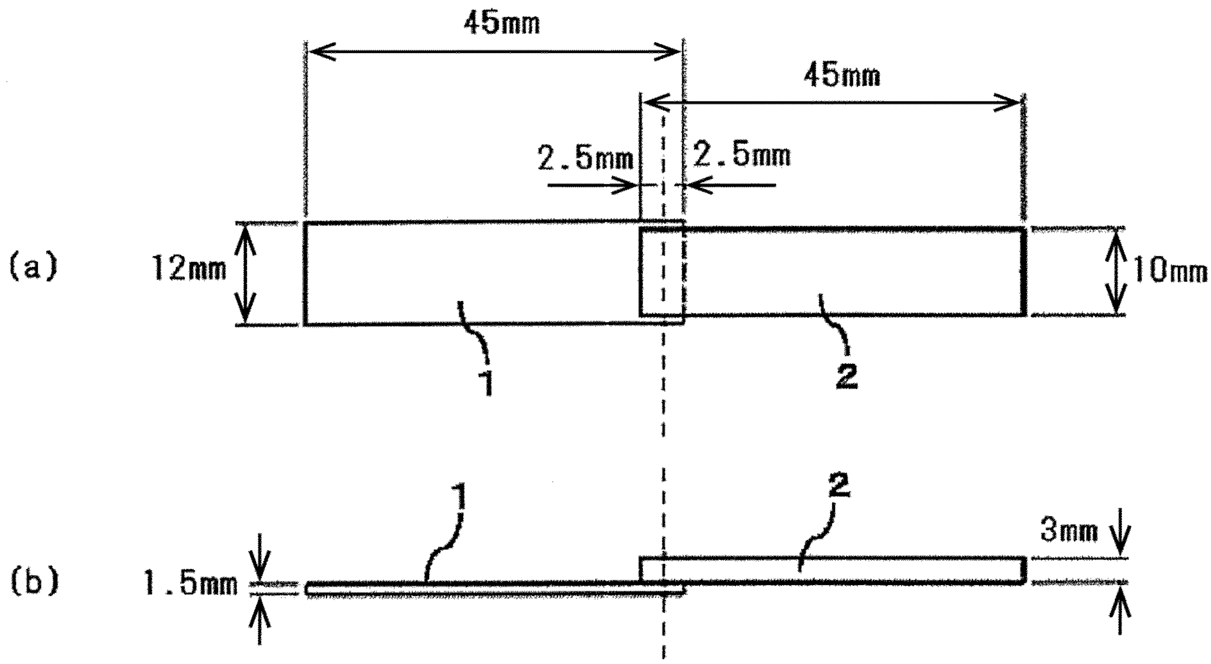

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019217680 A
- JP 2018203932 A
- WO 2020246335 A
- JP H04239550 A
- JP 2017052925 A
- JP 2017052262 A
- JP 2018070722 A
- JP 2019123809 A
- JP 2021063196 A
- JP 2019056035 A
- WO 2017038949 A
- JP 2021101020 A
- JP 2019188393 A
- JP 2020199755 A
- JP 2020125468 A
- JP 2022142501 A
- JP 6183822 B
- WO 2010010669 A
- JP 4157300 B
- JP 4040460 B